Europäisches Patentamt

European Patent Office

Office européen des brevets

(11) Veröffentlichungsnummer: **0 288 085 B1**

## EUROPÄISCHE PATENTSCHRIFT

(45) Veröffentlichungstag der Patentschrift: **03.11.93**

(51) Int. Cl.5: **F02P 19/02**, H02J 3/14

(21) Anmeldenummer: **88106527.0**

(22) Anmeldetag: **22.04.88**

(54) Verfahren und Vorrichtung zum Schnellaufheizen einer elektrischen Heizvorrichtung.

(30) Priorität: **24.04.87 DE 3713835**

(43) Veröffentlichungstag der Anmeldung:
**26.10.88 Patentblatt 88/43**

(45) Bekanntmachung des Hinweises auf die
Patenterteilung:
**03.11.93 Patentblatt 93/44**

(84) Benannte Vertragsstaaten:
**DE ES FR GB IT**

(56) Entgegenhaltungen:
EP-A- 0 075 872          EP-A- 0 209 968
FR-A- 2 182 900          FR-A- 2 568 630
US-A- 4 010 412          US-A- 4 635 594

PATENT ABSTRACTS OF JAPAN, Band 8, Nr.
207 (M-327)[1644], 21. September 1984 & JP-
A-59 96 486 (NIPPON JIDOSHA BUHIN SOGO
KENKYUSHO K.K.) 02-06-1984

PATENT ABSTRACTS OF JAPAN, Band 7, Nr.
59 (M-199)[1204], 11. März 1983 & JP-A-57 203
871 (NIPPON DENSO K.K.) 14-12-1982

(73) Patentinhaber: **BERU Ruprecht GmbH & Co.
KG
Wernerstrasse 35
D-71636 Ludwigsburg(DE)**

(72) Erfinder: **Löffler, Otto, Dipl.-Ing.
BERU Ruprecht GmbH & Co. KG
Wernerstrasse 35
D-7140 Ludwigsburg(DE)**
Erfinder: **Kessler, Frank
BERU Ruprecht GmbH & Co. KG
Wernerstrasse 35
D-7140 Ludwigsburg(DE)**
Erfinder: **Bauer, Paul
BERU Ruprecht GmbH & Co. KG
Wernerstrasse 35
D-7140 Ludwigsburg(DE)**

(74) Vertreter: **Wilhelms, Rolf E., Dr.
WILHELMS, KILIAN & PARTNER
Patentanwälte
Eduard-Schmid-Strasse 2
D-81541 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Schnellaufheizen einer elektrischen Heizvorrichtung mit mehreren Heizelementen, insbesondere einer elektrischen Glühanlage mit mehreren Glühkerzen für eine Brennkraftmaschine, bei dem die Heizelemente am Anfang mit einem hohen Gleichstrom bzw. hoher Überlast vorgeheizt werden und nach Erreichen einer vorgegebenen Temperatur mit Stromimpulsen versorgt werden, sowie eine Vorrichtung zur Durchführung dieses Verfahrens.

Derartige Verfahren und Vorrichtungen finden ihre Anwendung beim Glühanlassen von Dieselbrennkraftmaschinen, von Selbstzündern mit mehreren Zylindern, beispielsweise beim Sofortstart mit anschließendem Glühen auch bei laufendem Motor, bei Bedarf erneutem Glühen im Leerlauf, beim Schiebelauf, der unteren Teillast sowie einer Beschleunigung, von Brennkraftmaschinen mit Direkteinspritzung und von Vorkammer- und Wirbelkammer-Dieselbrennkraftmaschinen.

PATENT ABSTRACTS OF JAPAN, Band 7, Nr. 59 (M-199) [1204], 11. März 1983; & JP-A-57 203 871 (NIPPON DENSO K.K.) offenbart ein Verfahren nach dem ersten Teil des Anspruchs 1, bei dem zum Aufheizen einer elektrischen Heizvorrichtung die Heizelemente am Anfang mit einem hohen Strom und nach Erreichen einer bestimmten Temperatur impulsförmig mit Strom versorgt werden.

PATENT ABSTRACTS OF JAPAN, Band 8, Nr. 207 (M-327) [1644], 21. September 1984; & JP-A-59 96 486 (NIPPON JIDOSHA BUHIN SOGO KENKYUSHO K.K.) schlägt vor, zur impulsförmigen Stromversorgung den verschiedenen Heizelementen nacheinander Stromimpulse zu liefern, die sich im wesentlichen lückenlos aneinander anschließen.

US-A-4 010 412 beschreibt die impulsförmige Stromversorgung verschiedener Heizelemente aus einer Stromquelle.

Aus der DE-A-27 43 059 sind ferner ein Verfahren sowie eine Vorrichtung zu seiner Durchführung bekannt, bei denen zum Schnellaufheizen der Glühkerzen einer Glühanlage für eine luftverdichtete Brennkraftmaschine die Glühkerzen bis zum Erreichen ihrer Glühtemperatur mit einem überhöhten Strom gespeist werden und den Glühkerzen nach Erreichen ihrer Glühtemperatur dieser Strom nur noch stoßweise zugeführt wird.

Das erfindungsgemäße Verfahren und die erfindungsgemäße Vorrichtung können weiterhin bei der Fremdzündung von Mehrzylinder-Brennkraftmaschinen mit nach dem Zündverzug geregelten Glühelementen angewandt werden.

Aus der DE-A-3131191 ist eine derartige Zündung mit einem geregelten Glühelement für eine fremdgezündete Dieselbrennkraftmaschine zu entnehmen, wobei ein Übergang von der Fremdzündung auf die Selbstzündung vorgesehen ist.

Ein weiteres Anwendungsgebiet des erfindungsgemäßen Verfahrens und der erfindungsgemäßen Vorrichtung ist die Beheizung von Kraftstoffverdampfern mit mehreren gleichartigen Heizelementen über eine Gleichspannungsquelle, beispielsweise die Schnellaufheizung von Alkoholverdampfern mit anschließender Heizleistungsanpassung an die durchgesetzte Kraftstoffmenge, sowie die Beheizung von Flammstartanlagen mit mehreren gleichartigen Heizelementen über eine Gleichspannungsquelle, d.h. von Flammstartanlagen mit sog. Schnellstart.

Die Erfindung befaßt sich somit allgemein mit der Beheizung von mehreren gleichartigen Heizelementen mit einer Gleichspannungsquelle oder mit einer Wechselspannung, beispielsweise für beheizte Kraftstoff-Zuführungsrohre zu den einzelnen Einlaßventilen einer Kraftmaschine oder für ein beheiztes Rußfilter, das mit mehreren Heizelementen oder Heizelementgruppen bestückt ist.

Aus der DE-A-14 26 173 ist eine weitere Heizvorrichtung mit Heizelementen, beispielsweise Glühkerzen bekannt, bei der der temperaturabhängige Heizdrahtwiderstand der Heizwendel eines Heizelementes als Maß für die Temperatur des Heizstiftes herangezogen wird. Der Strom zum Aufheizen der Heizelemente wird über einen Schalttransistor dem Heizdrahtwiderstand zugeführt.

Das Aufheizen einer Vorglüheinrichtung für eine Brennkraftmaschine mit einem erhöhten Strom und das anschließende Halten der Temperatur über einen Widerstand ist weiterhin aus der DE-C-29 26 844 zu entnehmen. Aus der DE-A-31 18 793 ist es weiterhin bekannt, Glühkerzen zum Aufheizen in Parallelschaltung und zum Halten der Temperatur in Reihenschaltung zu betreiben.

Bei dem bekannten Verfahren und der bekannten Vorrichtung der eingangs genannten Art, bei denen nach Erreichen der bestimmten Anfangstemperaturen alle Heizelemente impulsförmig mit Strom versorgt werden, sind kurze Vorheizzeiten insbesondere Vorglühzeiten von unter 1 Sekunde bis 850°C bei Glühanlagen für Dieselbrennkraftmaschinen in Verbindung mit einem fortgesetzten Glühen bei laufender Maschine nicht erreichbar.

Bei einer getakteten oder impulsförmigen Stromversorgung der Glühkerzen einer Glühanlage einer Dieselbrennkraftmaschine ergibt sich weiterhin der Nachteil, daß der Batteriestrom stark schwankend ist und dadurch andere Verbraucher beeinflußt werden. Besonders die bei Leistungsrelais angewandte niedrige Taktfrequenz stört die Beleuchtungsanlage, da diese den Eindruck eines ständigen Auf- und Abblendens hervorruft, was auf der stoßweisen Batterielast beruht.

Bisher war darüberhinaus die Überwachung der Glühkerzen auf Kurzschluß oder Drahtbruch während des Glühens nur bedingt möglich und konnte eine Motorabschaltung beim Ampelstop und ein Wiederstart bei Dieselbrennkraftmaschinen nicht realisiert werden, da die bisher bekannten Glühanlagen für den Start bei kalter Maschine zu viel Zeit benötigen.

Weiterhin sind Schaltungen mit Relais als Leistungsschalter ungünstig , da die Taktfrequenz begrenzt ist, die Schaltverzögerungen bei Relais erheblich sind, die zulässige Einschaltstromspitze bei Relais begrenzt ist und Relais eine eingeschränkte Lebensdauer haben und nicht geräuschlos schalten. Schaltungen mit Vorschaltwiderständen sind darüberhinaus energetisch ungünstig, da unnötigerweise Leistung in den Vorschaltwiderständen umgesetzt wird.

Schließlich führen Steuerschaltungen mit Messung oder Simulation des Aufheiz- oder Abkühlverhaltens der Heizelemente zu einem erheblichen zusätzlichen Aufbau. Auch sind Schaltungen ungünstig, bei denen einmal parallel für die Vorheizung und dann in Reihe für das Weiterheizen geschaltet wird, weil die Glühkerzenheizelemente zumindest teilweise massefrei sein müssen, was einen Mehraufwand bedeutet. Eine Starthilfe mit Überspannung, d.h. ein Starten einer 12-Volt-Anlage, beispielsweise mit 24 Volt,ist schließlich bisher in Verbindung mit Sofortstartanlagen bei anfänglichem Schnellheizen ohne Überhitzung und einer anschließenden getakteten Stromversorgung nicht bekannt geworden.

Bei Kraftstoffverdampfern für Gleichstromanlagen und auch bei Flammstartanlagen ist es weiterhin bisher nicht üblich, in wenigen Sekunden die vorgesehene Temperatur mit einer Schnellaufheizung zu erreichen und dann zur Leistungsanpassung an die durchgesetzte Kraftstoffmenge Heizenergie getaktet zuzuführen. Eine Anpassung der Heizleistung an den Kraftstoffdurchsatz, z.B. durch Messen der Heizelemente-Temperatur oder des temperaturabhängigen Stromes der Heizelemente und/oder des Widerstandes der Heizelemente und ein danach erfolgendes Steuern oder Regeln in der erfindungsgemäßen Art ist gleichfalls bisher nicht genannt.

Durch die Erfindung sollen somit ein Verfahren und eine Vorrichtung der eingangs genannten Art geschaffen werden, mit denen sich insbesondere praxisgerechte Glühanlagen mit Schnellglühkerzen für mobile und stationäre Dieselbrennkraftmaschinen vom Zwei- oder Viertakttyp verwirklichen lassen. Die Schnellstartanlagen mit Vorwiderständen sollen ersetzt werden und es sollen Schnellstartanlagen zum Weiterglühen auch bei laufendem Motor ermöglicht werden. Dabei soll es möglich sein, Schaltungen, die bisher mit einem Relais als Leistungsschalter ausgerüstet waren, zur Erhöhung der Lebensdauer und der besseren Heizleistungsanpassung an den tatsächlichen Bedarf sowie zu einem möglichst geräuschlosen und verschleißfreien Schalten mit Taktfrequenzen, die mit Relais nicht realisierbar sind, durch Halbleiterschalter zu ersetzen und die Glühkerzenüberwachung zu verbessern. Weiterhin sollen Batteriestromschwankungen beim Taktbetrieb so verringert werden, daß Funkstörungen minimiert, bzw. die elektromagnetische Verträglichkeit optimiert wird. Ein Abschalten der Maschine bei einem Anhalten des Fahrzeuges, beispielsweise an einer Ampel und ein Wiederstart der Maschine sollen auch bei Dieselbrennkraftmaschinen ermöglicht werden.

Es sollen insbesonderen Glühzündanlagen mit Heizleistungsanpassung an den tatsächlichen Bedarf ermöglicht werden, die über Zündverzugsmeßanordnungen gesteuert oder geregelt werden.

Bei der Heizung von Kraftstoffverdampfern mit mehreren Heizelementen soll eine Schnellaufheizung mit Heizleistungsanpassung an die Durchsatzmenge bei verbesserter Dampfqualität und Verringerung der Verkokungsneigung erreicht werden. Gleiches soll bei Flammstartanlagen durch eine entsprechende Beschaltung, d.h. Heizenergieversorgung von mehreren Heizelementen erreicht werden.

Bei der Beheizung von mehreren gleichartigen Heizelementen, beispielsweise bei einem beheizten Kraftstoffzuführungsrohr, sollen die Heizelemente bei einer Schnellaufheizung mit anschließender Leistungsanpassung an die Durchsatzmenge so beschaltet werden, daß der sich bildende Oberflächendampf eine direkte Berührung der durchgesetzten Kraftstoffmenge mit den Zuführungsrohren verhindert.

Die der Erfindung zugrundeliegende Aufgabe besteht daher darin, das bekannte Verfahren der eingangs genannten Art sowie die Vorrichtung zu seiner Durchführung so weiterzubilden, daß die vorgesehene Solltemperatur in kürzerer Zeit erreicht wird. Bei Glühanlagen für diese Brennkraftmaschinen soll eine Vorglühzeit von unter 1 Sekunde erreicht werden, während bei anderen Heizvorrichtungen, beispielsweise Kraftstoffverdampfern, eine Schnellaufheizung in wenigen Sekunden möglich sein soll.

Diese Aufgabe wird bei dem erfindungsgemäßen Verfahren gemäß Patentanspruch 1 dadurch gelöst, daß für die impulsförmige Stromversorgung verschiedene vorbestimmte Heizleistungsstufen benutzt werden, für welche verschiedenen Heizleistungsstufen die vorhandenen Heizelemente zu vorbestimmten, für die verschiedenen Heizleistungsstufen unterschiedlich großen, Heizelementgruppen zusammengesetzt werden und daß die Stromimpulse in den verschiedenen Heizleistungsstufen den zur jeweiligen Heizleistungsstufe zugehörigen vorbestimmten Heizelementgruppen periodisch, pro Gruppe gleichzeitig, so geliefert werden, daß sich die den jeweiligen vorbestimmten Heizelementgruppen gelieferten Stromimpulse zeitlich im wesentlichen so aneinander anschließen, daß in der jeweiligen Heizleistungsstufe der Summenstrom als Funktion der Zeit praktisch konstant ist.

Die erfindungsgemäße Vorrichtung gemäß Patentanspruch 8 zeichnet sich dadurch aus, daß jedem Heizelement ein eigenes Schaltelement zugeordnet ist, das im Stromversorgungskreis des Heizelementes liegt,und eine Ansteuerlogik für die Schaltelemente vorgesehen ist, die so ausgebildet ist, daß sie die Schaltelemente der jeweiligen vorbestimmten, für Verschiedene Heizleistungsstufen in unter-schiedlicher Gruppengroße Zusammengesetzten Heizelementgruppen pro Gruppe gleichzeitig an- und abschaltet.

Mit dem erfindungsgemäßen Verfahren und der erfindungsgemäßen Vorrichtung ist bei Glühanlagen ein Sofortstart mit Glühkerzenaufheizzeiten von unter einer Sekunde möglich. Dabei wird auch bei Glühen bei laufendem Motor eine Glühkerzenüberhitzung vermieden und ist der Heizstrom so gleichmäßig, daß Beleuchtungsfunktionen und andere Verbraucher nicht beeinträchtigt werden.

Besonders bevorzugte Weiterbildungen und Ausgestaltungen des erfindungsgemäßen Verfahrens und der erfindungsgemäßen Vorrichtung sind Gegenstand der Patentansprüche 2 bis 7 und 9 bis 14.

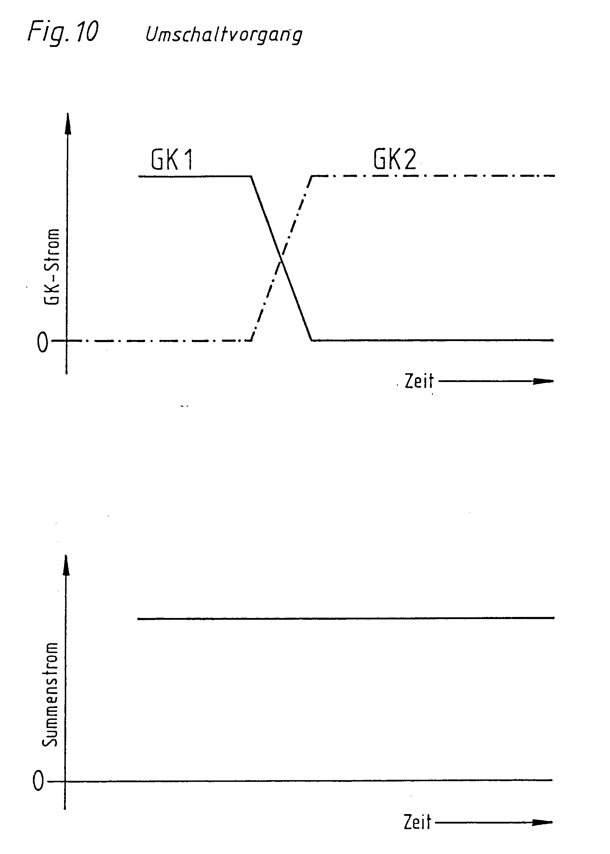

Dadurch, daß die Heizelemente gruppenweise nacheinander und lückenlos (wie anhand von Fig. 10 erläutert) mit Stromimpulsen versorgt werden, besteht die Möglichkeit, verschiedene Heizleistungsstufen je nach Anzahl der Heizelemente pro Gruppe zu wählen, um eine gute Leistungsanpassung an den Bedarf, beispielsweise beim Vorglühen, bei der Anlassbereitschaft, beim Anlassen und beim Glühen bei laufender Brennkraftmaschine zu erreichen. Es sind weiterhin eine automatische Abschaltung der Glühung bei laufender Maschine und eine automatische Zuschaltung der Glühung beim Leerlauf, beim Betrieb im unteren Teillastbereich und beim Schiebelauf möglich.

Durch die Verwendung von geeigneten Leistungsschaltern, beispielsweise Halbleiter-Leistungsschaltern anstelle von Relais, ergibt sich eine größere Lebensdauer der Gesamtschaltung.

Schließlich ist eine Glühkerzen-Überwachung auf Unterbrechung und Kurzschluß auch bei laufender Glühung möglich und kann eine Starthilfe, beispielsweise bei einer 12-Volt-Anlage mit 24 Volt ohne die Gefahr einer Beschädigung der Glühanlage gegeben werden.

Abschalten der Maschine bei einem Ampelstop und Wiederstart sowie ein Mehrfachstart sind ohne thermische Überlastung der Glühkerzen möglich.

Das heißt im einzelnen, daß bei Glühanlagen zum Aufheizen der Glühkerzen für einen Sofortstart mit nachfolgendem längeren Glühen bei einer Dieselbrennkraftmaschine bisher selbstregelnde Glühkerzen zum Vorglühen und Glühen mit Glühzeiten von ca. 3 bis 7 Sek. für eine Temperatur von 850° C eingesetzt wurden. Diese selbstregelnden Glühkerzen schützen sich selbst vor einer Überhitzung, da ihre Leistungsaufnahme an den Heizwendeln über temperaturabhängige Regelwendeln begrenzt wird, wobei die Energieabstrahlung mit der vierten Potenz der Temperatur zusätzlich wirkt. Derartige Glühkerzen sind jedoch für den Betrieb bei laufender Maschine ohne zusätzliche Maßnahmen nur bedingt geeignet, weil der Selbstregelbereich begrenzt ist, und die Lichtmaschinen-Ladespannung bei 12V-Anlagen beispielsweise bis 15,5 Volt gehen kann, ein Wert, bei dem diese Glühkerzen im allgemeinen wegen Überhitzung durchbrennen.

Für eine Schnellaufheizung bieten sich derartige Glühkerzen jedoch gerade an, wenn sie anfangs mit Überlast schnell aufgeheizt werden und dann durch Takten der Stromversorgung die Heizleistung soweit reduziert wird, daß die Glühkerzen auch bei voller Lichtmaschinenspannung nicht beschädigt werden. Z.B. sind bei einer vierfachen Überlast bei Glühkerzen mit Vorglühzeiten von 3 Sekunden Aufheizzeiten unter 1 Sekunde erreichbar.

Weiterhin ergeben sich bei der Verwendung von üblichen Leistungsrelais als Schalter Einschaltverzögerungen von bis zu 100 Millisekunden , die die Zeit bis zur Anlaßbereitschaft entsprechend verlängern. Bei der Verwendung von Halbleiterleistungsschaltern beträgt diese Einschaltverzögerung einige Mikrosekunden, was vernachlässigbar ist.

Weiterhin ist dann, wenn z.B. ca. 5 Minuten bei laufender Maschine weitergeglüht und dabei getaktet werden soll, mit üblichen Leistungsrelais nur eine begrenzte Lebensdauer erzielbar. Bei Halbleiterschaltern spielt die Anzahl der Ein- und Ausschaltvorgänge eine untergeordnete Rolle, vorausgesetzt, daß sie richtig dimensioniert sind. Darüberhinaus kann bei Halbleiterschaltern die Taktfrequenz erheblich höher gewählt werden als es bei Leistungsrelais der Fall ist. Ein- und Ausschaltvorgänge der Leistungsstufen können nur mit Halbleiterschaltern so synchronisiert werden, daß die Stromwelligkeit minimal ist.

Weiterhin kann bei Leistungsrelais die Einschaltstromspitze nicht beliebig hoch gewählt werden, da sonst die Kontakte zu stark belastet werden und vorzeitig verschleißen. Übliche Leistungsrelais für Glühanlagen arbeiten darüberhinaus nicht geräuschlos.

Bei einer stoßweise erfolgenden Entnahme des Stroms aus der Batterie, vor allen Dingen bei niedriger Taktfrequenz, wie sie bei Relais verwandt wird, wirkt sich schließlich die schwankende Batteriebelastung negativ, beispielsweise auf die Beleuchtungsanlage eines Fahrzeuges aus. Es entsteht der Eindruck, als ob die Scheinwerfer ständig auf- und abgeblendet würden. Auch dieser Mangel wird durch das erfindungsgemäße Verfahren und die erfindungsgemäße Vorrichtung behoben.

Bei dem erfindungsgemäßen Verfahren und der erfindungsgemäßen Vorrichtung wird somit der Batteriestrom dadurch möglichst gleichförmig gemacht, daß die Stromimpulse lückenlos aneinandergereiht werden. Es kann dabei mit verschiedenen Leistungsabstufungen gefahren werden, ohne daß der Batteriestrom in den einzelnen Leistungsstufen stark schwankt.

Im folgenden werden anhand der zugehörigen Zeichnung besonders bevorzugte Ausführungsbeispiele der Erfindung näher beschrieben. Es zeigen:

Fig. 1 das Blockschaltbild einer Glühanlage mit einem Ausführungsbeispiel der erfindungsgemäßen Vorrichtung,

Fig. 2 in Diagrammen die möglichen Leistungsstufen bei einer Glühanlage für eine Vierzylinderbrennkraftmaschine,

Fig. 3 in einer graphischen Darstellung den Vorglühsummenstrom,

Fig. 4 in einer graphischen Darstellung den Summenstrom bei Anlaßbereitschaft,

Fig. 5 in einer graphischen Darstellung den Glühsummenstrom,

Fig. 6 in einer graphischen Darstellung die Möglichkeiten der Stromtaktung bei laufender Maschine,

Fig. 7 in einer graphischen Darstellung das Glühen bei laufender Maschine und die zugehörigen Temperaturgrenzen,

Fig. 8a, 8b, 8c, 8d das Schaltbild einer Prüfschaltung mit festeingestellten Zeitgliedern und Spannungsschaltschwellen,

Fig. 9 in einer graphischen Darstellung den Heizverlauf bei einem Verdampfer mit vier Heizstäben und ungleichförmiger Heizung zum Ausgleich der ungleichmäßigen Kraftstoffverteilung um die Heizelemente und

Fig. 10 in einer graphischen Darstellung die Übergänge beim Umschalten der Glühkerzensträge und die Impulsanreihung bei einem Ausführungsbeispiel der erfindungsgemäßen Vorrichtung.

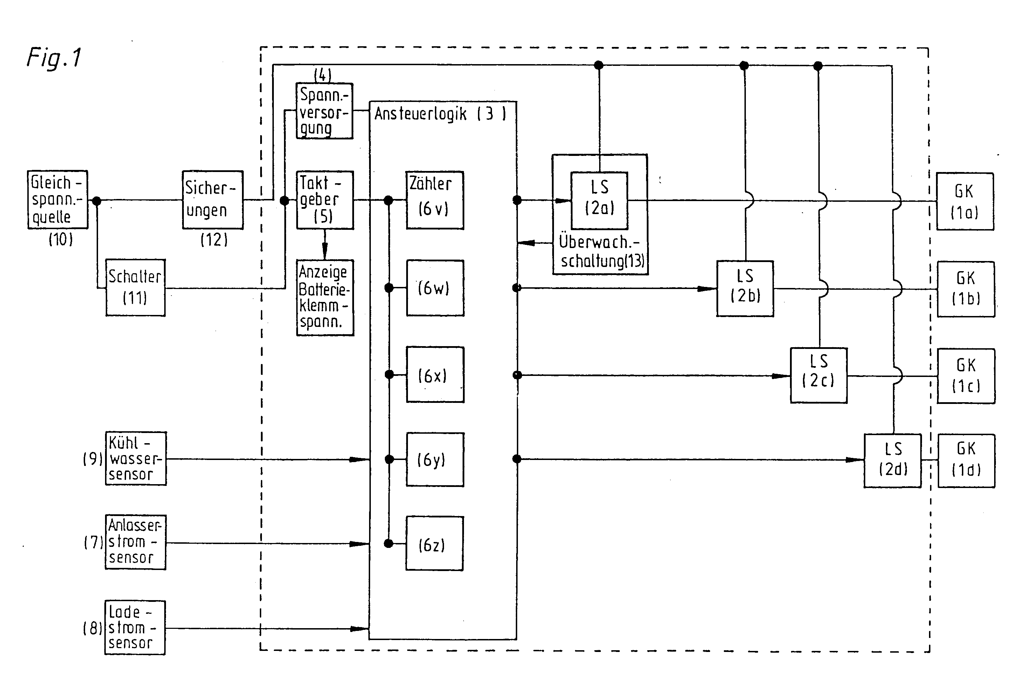

Die in Fig. 1 dargestellte Glühanlage, insbesondere für eine 4-Zylinder-Dieselbrennkraftmaschine, besteht im wesentlichen aus selbstregelnden Glühkerzen 1a bis 1d, wobei jeder Glühkerze 1a bis 1d ein oder mehrere parallele separate Halbleiterleistungsschalter 2a bis 2d zugeordnet sind, die sowohl gruppenweise zeitlich parallel als auch nacheinander über eine Ansteuerlogik 3 an- oder abgeschaltet werden können, die von einem Spannungswandler 4 versorgt wird, um zu verhindern, daß die Ansteuerlogik 3 bei Spannungseinbrüchen der Bordspannung zeitweise aussetzt.

Ein Taktgeber 5, dessen Frequenz vom Quadrat der Batterieklemmenspannung abhängt, läuft mit, sobald die Betriebsspannung anliegt. Vom Taktgeber 5 werden Zähler 6v, 6w, 6x, 6y und 6z angesteuert, die bei festvorgegebenen oder variablen Zählerständen die folgenden Funktionen haben: Der Zähler 6v dient zur Regelung und Anzeige der Vorglühzeit, der Zähler 6w dient zur Begrenzung und Anzeige der Anlaßbereitschaft, der Zähler 6x dient zur Vorgabe von Prüfimpulsen beim ersten Einschalten und bedarfsweise zum Anzeigen, daß die Anlage in Ordnung ist, und zwar bei Stromtastung bei laufender Maschine, bei der Stromtastung vor einem Abschalten der Maschine beim Anhalten des zugehörigen Fahrzeuges vor einer Ampel, gegebenenfalls mit einer entsprechenden Anzeige, und bei der Stromtastung während des Anhaltens des Fahrzeuges vor einer Ampel, gleichfalls gegebenenfalls mit einer Anzeige, der Zähler 6y dient zur Abschaltung und Anzeige nach einer Fehlanlassung und der Zähler 6z dient zur verzögerten Anzeige der Anlaßbereitschaft unter einer Temperatur von 0° C.

Da die Taktfrequenz des Taktgebers 5 vom Quadrat der Batteriespannung abhängt, ist weiterhin die Vorglühzeit so bestimmt, daß die umgesetzte Heizenergie beim Vorglühen trotz Spannungsschwankungen nahezu konstant bleibt.

Die Taktgeberfrequenz wird weiterhin zur Anzeige der Batterieklemmenspannung benutzt, wobei dann, wenn ein unterer Sollwert der Spannung unter der gegebenen momentanen Last unterschritten ist, kein Abschalten der Maschine beim Anhalten des Fahrzeuges vor einer Ampel möglich ist.

Über einen Anlasserstromsensor 7 kann geprüft werden, ob ein vorgegebener Schaltschwellenwert, zumindest kurzfristig, überschritten wird, wobei dann die Taktkombination für diese Zeit geändert werden kann. Bei genügend hoher Taktfrequenz ist es möglich, die Welligkeit des Batteriestromes beim Anlassen zu verringern, indem die momentanen Stromtäler mit Taktimpulsen des Glühkerzenstromes aufgefüllt werden (bei momentan hohem Anlasserstrom setzt Glühung kurzzeitig aus).

Ein Lichtmaschinen-Ladestromsensor 8 kann als Sensor zum Erkennen der laufenden Maschine verwandt werden. Fließt kein Ladestrom zur Batterie, kann die Glühkerzenheizung über den Zähler 6y abgeschaltet werden. Bei laufender Maschine soll ein Kühlwassersensor oder sollen mehrere Kühlwassersensoren 9 einerseits nach erreichter Anfangstemperatur verschiedene Glühkerzentaktkombinationen einschalten und andererseits die Anschaltstromschwellenwerte des Glühkerzenstromes abgestuft oder kontinuierlich an den Bedarf der Maschine anpassen. Je kälter die Maschine ist, um so höher ist die Heizleistung und um so geringer ist der Glühstromschaltschwellenwert.

Eine Gleichstromquelle 10, beispielsweise die Batterie eines Fahrzeuges ist über einen Schlüsselschalter 11 mit der Glühanlagensteuerung verbunden. Es sind weiterhin Sicherungen 12 und ein Verpolungsschutz vorgesehen sowie Maßnahmen zum Schutz der Anlage vor Störimpulen und Funkentstörmaßnahmen getroffen.

Der Glühkerzenstrom kann überwacht werden, um bei Erreichen der Schaltschwellenwerte den Strom an einer Glühkerze oder beispielsweise nach einer Mittelwertsbildung an allen Glühkerzen ein- und auszuschalten. Durch eine Prüfung des Spannungsabfalls an den Leistungsschaltern 2a bis 2d können ein Kurzschluß und eine Unterbrechung der Glühkerzen 1a bis 1d und der Halbleiterschalter 2a bis 2d festgestellt werden. Wird der Temperaturgang des Leistungsschalterinnenwiderstandes kompensiert bzw. bei der Auswertung berücksichtigt, ist der Spannungsabfall ein Maß für den momentanen temperaturvariablen Glühkerzenstrom. Zu diesem Zweck ist eine Überwachungsschaltung 13 vorgesehen.

Der Glühkerzenstrom wird impulsförmig so zugeführt, daß sich die Stromimpulse lückenlos aneinander reihen, wobei in Fig. 10 der Umschaltvorgang zwischen zwei Glühkerzen und der sich daraus ergebende Summenstrom dargestellt sind. Zusätzliche Maßnahmen zur Unterdrückung von Störimpulsen beim Umschalten können erforderlich werden, sind aber nicht speziell dargestellt.

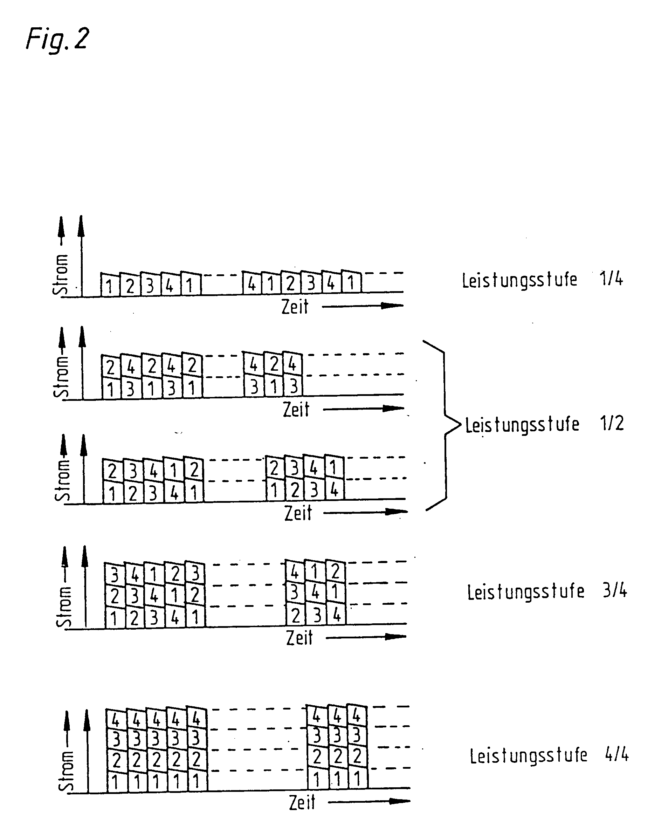

Fig. 2 zeigt die Stromtaktung bei einer Anlage für eine Vierzylindermaschine mit den dabei möglichen Taktstufen.

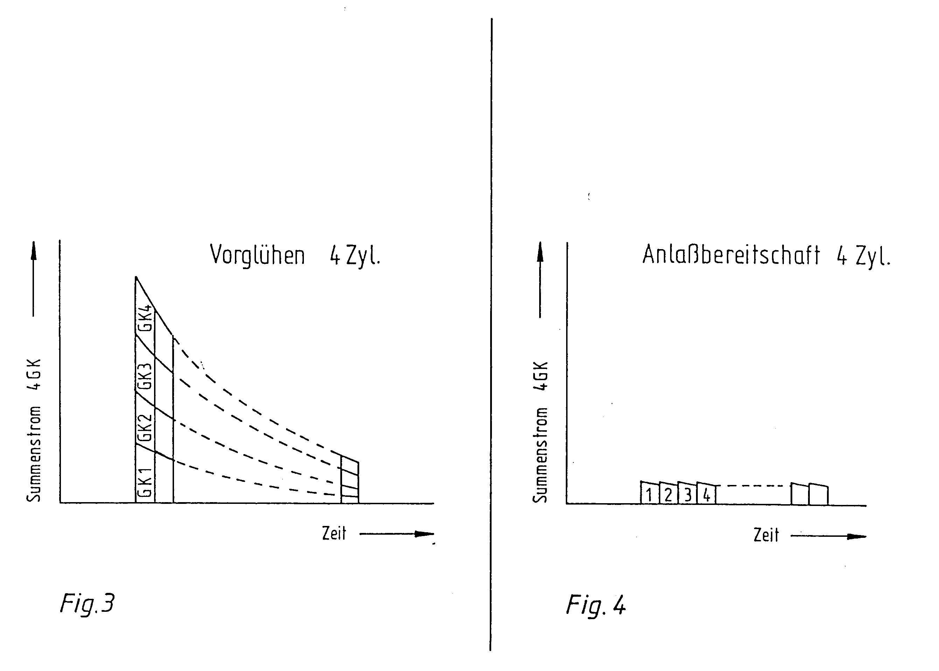

Fig. 3 zeigt den Summenstrom für vier Glühkerzen beim Vorglühen, der sich bei Schnellglühkerzen ergibt, wenn alle Glühkerzen gleichzeitig eingeschaltet sind und Fig. 4 zeigt den Summenstrom während der Anlaßbereitschaft, bei der die Glühkerzen nacheinander mit Stromimpulsen beaufschlagt werden.

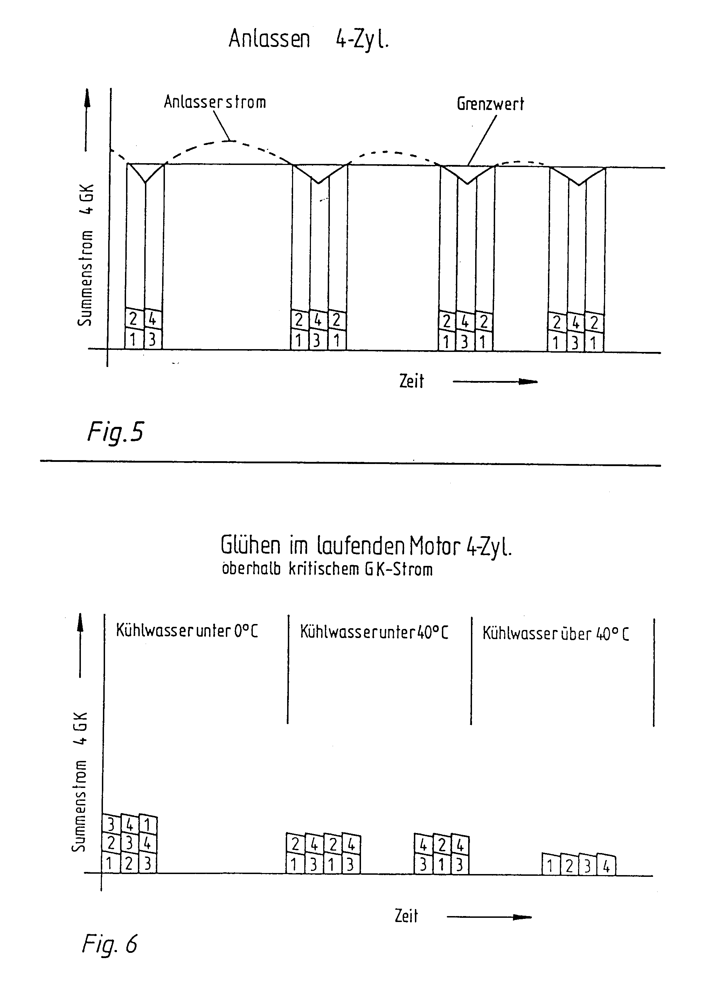

Fig. 5 zeigt den Glühsummenstrom beim Anlassen der Maschine, der zeitweise aussetzen kann, wenn ein vorgegebener Anlasserstrom-Grenzwert überschritten ist und

Fig. 6 zeigt drei Möglichkeiten der Stromtaktung beim Glühen bei laufender Maschine, nämlich der Stromtaktung mit der Taktstufe 3/4 bei einer Temperatur von unter 0° C, der Stromtaktung mit der Taktstufe 1/2 bei Temperaturen von 0 - 40° C und der Stromtaktung mit der Taktstufe 1/4 bei Temperaturen von 40 - 80° C.

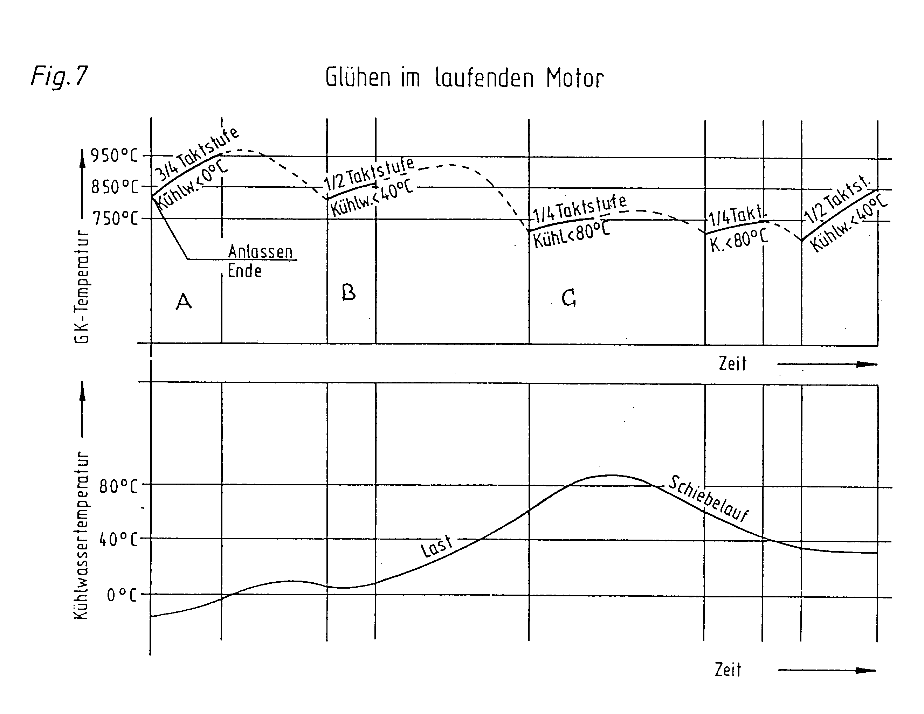

Fig. 7 zeigt den möglichen Ablauf des Glühvorganges bei laufender Maschine, wobei die Kurve A bei einer Kühlwassertemperatur von unter 0° C beginnt, was der Taktstufe 3/4 entspricht und zeigt, daß die Temperatur bis zur vorgegebenen Obergrenze schnell ansteigt (entsprechend einem Strom von z.B. 12 A).

Nach Erreichen der vorgegebenen Temperaturobergrenze wird die Heizung abgeschaltet und erst dann wieder eingeschaltet, wenn bei nachfolgenden Tastimpulsen, deren Taststrom ein Maß für die Glühkerzentemperatur ist, festgestellt wird, daß dieser Strom wieder angestiegen ist. Mit welcher Taktstufe dann geheizt wird, hängt davon ab, welche Temperatur das Kühlwasser inzwischen angenommen hat. Im Bereich von 0 bis 40° C würde die Heizung nach der Kurve B ablaufen, im Bereich von 40 bis 80° C nach der Kurve C, während die Heizung bei über 80 ° C nicht eingeschaltet würde, sondern weiter mit Einzelimpulsen oder in Pulspaketen getastet würde. Die Anzahl der Tastimpulse pro Sekunde soll klein sein gegenüber der Taktfrequenz in den Heizperioden (nur alle paar Sekunden tasten).

Die Kurven A, B oder C werden nur bei einem erneuten Start nach dem Anlassen durchlaufen, bei laufender Maschine wird nur kurzfristig nachgeregelt, bis die Solltemperatur erreicht ist. Die Impulszahl kann dabei eine Zahl sein, die durch die Anzahl der Glühelemente ohne Rest teilbar ist, damit alle Glühkerzen in gleichem Maße beaufschlagt werden.

Wenn eine auf 12 Volt ausgelegte Anlage mit einer Starthilfe von 24 Volt betrieben wird, werden entsprechend der mit dem Quadrat der Batteriespannung ansteigenden Taktfrequenz des Taktgebers alle Zeiten auf etwa ein Viertel verkürzt, wobei der Anlasserstrom so ansteigt, daß der Schaltschwellenwert überschritten wird und die Glühkerzen außer beim Vorglühen dabei vorübergehend nicht beheizt werden. Wenn die Maschine läuft, fließt der Lichtmaschinenladestrom als Maß für laufende Maschinen erst nach Abklemmen der 24-Volt-Starthilfe innerhalb der vorgegebenen Anlaßzeitbegrenzung, so daß auch dabei so lange nicht geheizt wird, bis die Starthilfe abgeklemmt ist, um ein frühzeitiges Abklemmen zu erzwingen, wenn ein Start erfolgreich sein soll.

Wie bei der laufenden Maschine können Tastimpulse auch vor dem Starten erzeugt werden, um bereits beim ersten Anlegen der Spannung über den Schlüsselschalter eine erste Heizung vorzunehmen, was einen Zeitgewinn für den Sofortstart darstellt, die Glühkerzen auf Kurzschluß und Unterbrechung zu überprüfen und die Klemmenspannung der Batterie unter Last festzustellen.

Da die Impulse nacheinander, z.B. bei der Taktstufe 1/4 kommen, ist der erste Einschaltstromstoß auf 1/4 begrenzt. Da die Glühkerzen jetzt bereits etwas vorgeglüht sind, tritt infolge ihrer Selbstregeleigenschaft beim anschließenden Vorglühen eine verminderte Einschaltspitze auf, die auch eine kalte Batterie mit erhöhtem Innenwiderstand aushält.

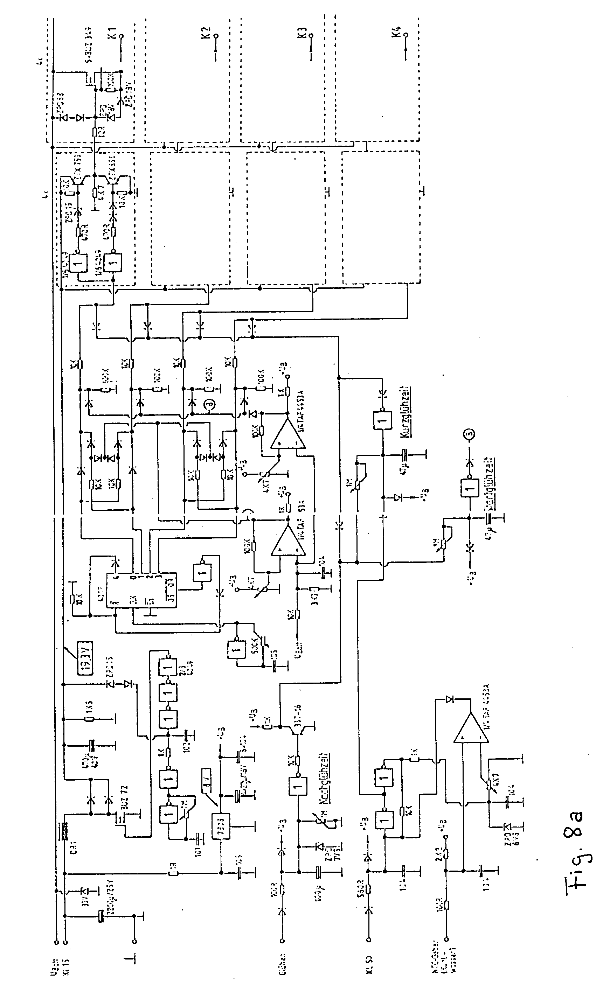

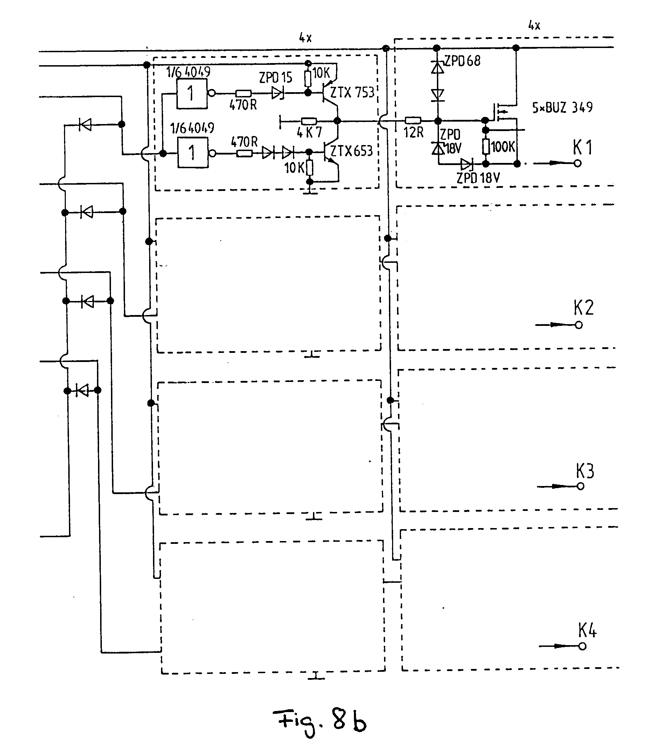

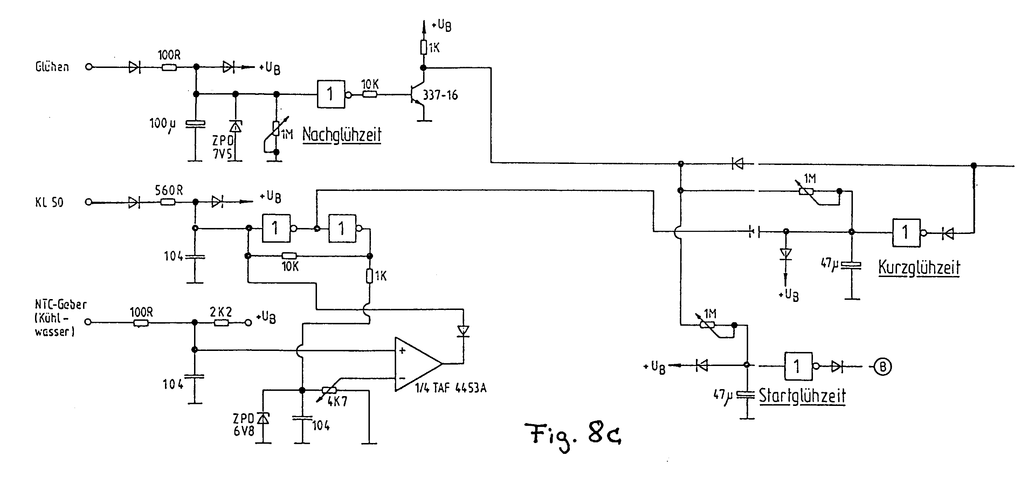

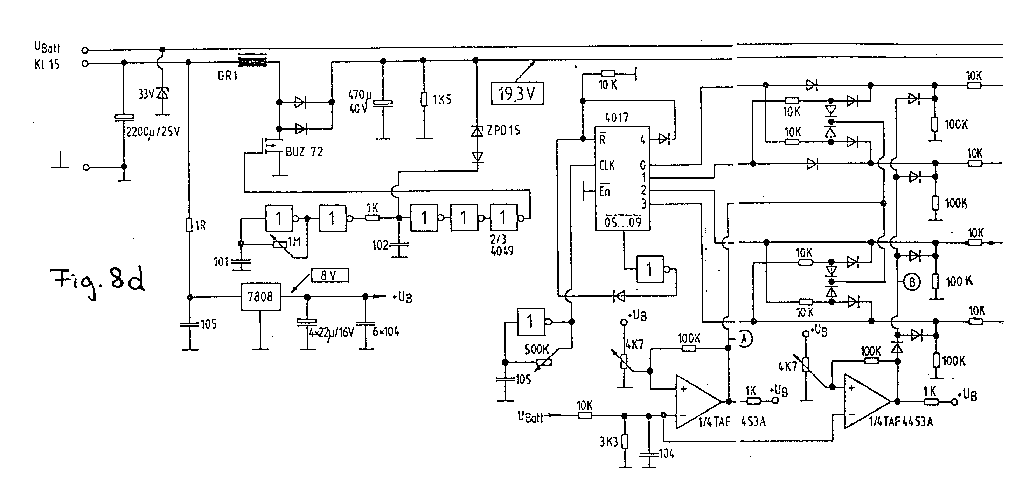

Fig. 8 zeigt das Schaltbild der Schaltung eines Ausführungsbeispiels der erfindungsgemäßen Vorrichtung zu Prüfzwecken , die Spannungsschwankungen durch Schaltschwellenwerte in Verbindung mit selbstregelnden 6-Volt-Glühkerzen ausgleichen kann,wobei hier festeingestellte Zeitschalter die Zeitabläufe vorgeben.

Als Spannungsquelle dient ein 250-Ampere-Konstanter.Beim Einschalten wird mit voller Spannung von 12 Volt ohne Takten für eine festeingestellte Zeit von 0,8 Sekunden geglüht.

Sofort nach Ablauf dieser Zeitspanne wird in Abhängigkeit von der Höhe der Batteriespannung getaktet, so daß alle vier Glühkerzen zeitverschachtelt beaufschlagt werden und die Stromimpulse lückenlos aneinandergereiht sind. Wird ein Anlassen nicht simuliert, dann wird die Heizung nach 20 Sekunden abgeschaltet. Ein Simulieren des Anlassens durch ein Absenken der Spannung auf 9 Volt führt zu einem gleichzeitigen Heizen der Glühkerzen. Fällt die Speisespannung auf 11 Volt ab, so wird auf eine paarweise erfolgende Gegentaktheizung (50 %) umgestellt. Nach dem Start wird 5 Minuten weitergeglüht.

In der Praxis würden sich die Glühkerzen evtl. durch Glühen bei laufender Maschine überhitzen. Deshalb erfolgt (nicht in vorstehender Prüfschaltung enthalten) eine Glühkerzenstromüberwachung und wird die Heizung rechtzeitig bei einem vorgegebenen Schaltschwellenwert abgeschaltet. Die Neueinschaltung erfolgt erst nach einer Abkühlung, wenn bei periodischem impulsförmigen Prüftasten ein deutlich erhöhter Stromimpulswert auftritt. Es ist auch möglich, das Heizen bei laufender Maschine oberhalb eines vorgebenden Spannungsschwellenwertes von z.B. 13 Volt ganz abzuschalten.

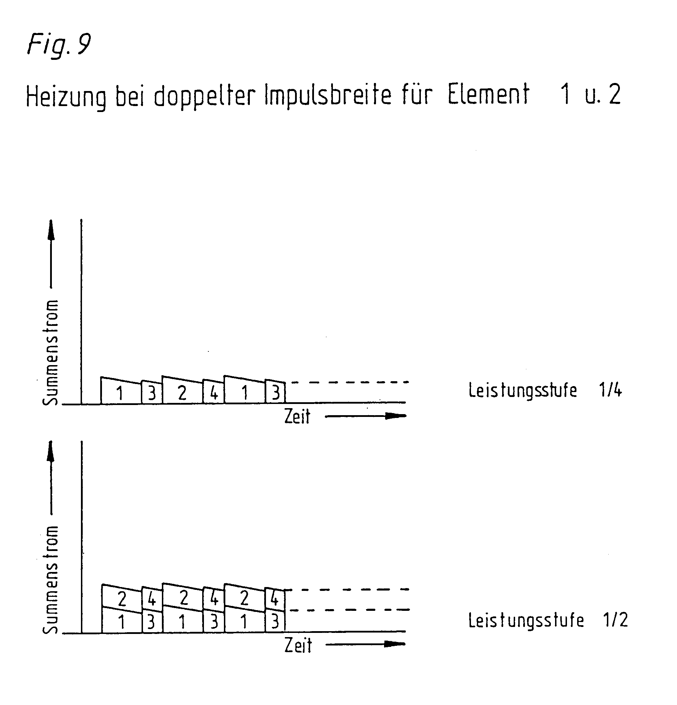

Fig. 9 zeigt in einer graphischen Darstellung die Möglichkeit, mit ungleich langen Heizimpulsen gleiche Heizelemente zu beaufschlagen. Damit lassen sich z.B. bei Verdampfern mit vier Heizstäben ungleiche Heizleistungsumsätze entsprechend beispielsweise einer ungleichen Kraftstoffverteilung um die Heizstäbe herum erzielen, wobei dann, wenn auf gleichförmigen Batteriestrom verzichtet wird, zusätzlich zwischen den Stufen gemäß Fig. 2 und denen gemäß Fig. 9 hin- und hergeschaltet werden kann, um eine Energieverteilung nach einem vorgegebenen Programm zu bewirken.

Im folgenden wird der Betriebsablauf einer Sofortstartanlage mit 12 Volt für einen Dieselmotor beschrieben, die mit Schnellheizregelglühkerzen für 6 Volt und Halbleiter-Leistungsschaltern ausgelegt ist.

Bei einer Schlüsselschalterstellung 0 ist die Schaltanlage von der Bordspannung getrennt.

Bei einer Schlüsselschalterstellung 1, d.h. bei der Lenkradentriegelung, wird der Leistungs- und Steuerteil mit der Bordspannung verbunden und werden die Glühkerzen separat, d.h. zeitlich nacheinander, mit jeweils mindestens einem zeitlich begrenzten energiereichen Stromimpuls beaufschlagt. Auf diese Weise wird ein Zeitgewinn durch Vorheizen erzielt. Bei einer Schlüsselschalterstellung 2, d.h. der Vorglühstellung, erfolgt ein Vorglühen der Glühkerzen. Alle Glühkerzen werden dabei gleichzeitig mit voller Batteriespannung beaufschlagt. Die Heizzeit ist in Abhängigkeit vom Quadrat der Batterieklemmenspannung festgelegt und liegt bei intakter Batterie unter 1 Sekunde, wobei eine Glühkerzentemperatur von über 850° C erreicht wird.

Direkt nach dem Vorglühen werden die Glühkerzen bei Anlaßbereitschaft getaktet zeitlich nacheinander betrieben, wobei die Stromimpulse lückenlos aneinandergereiht sind. Es wird z.B. eine Glühkerzentemperatur zwischen 850° C und 1050° C beibehalten. Die Anlaßbereitschaft wird bei einer Temperatur über 0° C sofort nach dem Vorglühen angezeigt, bei darunterliegenden Temperaturen erfolgt die Anzeige zeitverzögert.Die Verzögerungszeit kann mit dem Fahrzeughersteller vereinbart werden. Wird trotz verzögerter Anzeige sofort angelassen, muß mit einer Fehlanlassung gerechnet werden, die Maschine geht evtl. wieder aus. Wird nicht angelassen, bzw. läuft die Maschine nicht weiter, wird die Glühkerzenheizung ca. 20 s nach Anlaßbereitschaft beendet.

In der Schlüsselschalterstellung 3, d.h. in der Anlaßstellung, erfolgt das Anlassen der Maschine. Es werden z. B. zwei Glühkerzen im Gegentakt zu zwei anderen Glühkerzen getaktet, so daß sich die Stromimpulse lückenlos aneinanderreihen. Ein zum pulsierenden Anlasserstrom analoges Signal schaltet die Glühkerzenheizung, zumindest kurzzeitig, bei Überschreiten eines vorgegebenen Anlasserstromwertes ab.

Besteht die Schalterstellung 3 ca. 20 Sekunden nach der Anlaßbereitschaft immer noch, so wird dem Fahrer ein Signal für die Fehlanlassung gegeben, auch wenn die Maschine bereits läuft, und zwar so lange, bis der Schalter in die Schalterstellung 1 gedreht ist.

Das Anlassen der Maschine war dann erfolgreich, wenn ein Ladestrom von der Lichtmaschine zur Batterie fließt. Geht die Maschine wieder aus, wird die Glühkerzenheizung abgeschaltet und wird dem Fahrer ein Signal für eine Fehlanlassung gegeben. Ein erneutes Anlassen kann nur über eine Rückstellung des Schalters in die Schalterstellung 0 erfolgen. Ein wiederholter Start ist für die Glühkerzen unbedenklich, da sie sich infolge ihrer Selbstregeleigenschaften selbst schützen.

Durch Rückstellen des Schlüsselschalters nach dem Anlassen in die Schalterstellung 1 erfolgt ein Glühen bei laufender Maschine nach dem Anlassen. Bei gegebenem Ladestrom der Lichtmaschine, was anzeigt, daß die Maschine läuft, und nach dem Umschalten des Schalters aus der Schalterstellung 3 wird anschließend an die mit ca. 20 Sekunden vorgegebene Anlaßbereitschaftszeit weiter bei laufender Maschine geglüht. Bei einer Kühlwassertemperatur unter 0° C wird mit der Taktstufe 3/4 geglüht, während bei einer Kühlwassertemperatur über 0° C und unter 40° C mit der Taktstufe 1/2 geglüht wird (2 Möglichkeiten s. Fig. 2). Bei einer Kühlwassertemperatur über 40° und unter 80° C wird mit der Taktstufe 1/4 geglüht, d. h. werden alle vier Glühkerzen zeitlich nacheinander angesteuert. Wird der vorgegebene Glühkerzenstrom unterschritten, wird die Heizung ganz abgeschaltet.

Bei laufender Maschine im unteren Teillastbereich, im Leerlauf, im Schiebebetrieb wird bei sonst abgeschalteter Heizung über Tastimpulse periodisch abgefragt, ob der Glühkerzen-Heizstrom noch im kritischen Bereich, beispielsweise unter 0° C über 12 A, bei 0 - 40° C über 13 A und bei 40 - 80° C über 14 A liegt. Die Heizung wird nach einer Glühkerzen-Abkühlung je nach Kühlwassertemperatur bei 40 - 80° C mit der Taktstufe 1/4, bei 0 - 40° mit der Taktstufe 1/2 und unter 0° C mit der Taktstufe 3/4 eingeschaltet. Bei heißen Glühkerzen wird wieder abgeschaltet. Bei einer merklichen Beschleunigung wird geheizt, bis der für den jeweiligen Temperaturbereich geltende Grenzwert erreicht ist, um eine überhöhte Geräuscherzeugung der Maschine zu vermeiden.

Aus dem obigen ist ersichtlich, daß jeder Glühkerze separat Halbleiterleistungsschalter zugeordnet sind, die separat sowohl gleichzeitig mit anderen als auch zeitlich nacheinander getaktet angesteuert werden können. Die Leistungsschalter werden so angesteuert, daß die Glühkerzenströme der verschiedenen Glühkerzen sich zeitlich nacheinander lückenlos aneinanderreihen, um Batteriestromschwankungen zu vermeiden und somit das Problem beispielsweise eines ungleichmäßigen Scheinwerferlichtes bei einem Fahrzeug zu vermeiden.

Es können unterschiedliche Leistungsstufen dadurch erzielt werden, daß mehrere Kombinationen von gleichzeitig oder nacheinander schaltenden Leistungsschaltern verwandt werden, wobei soviele Leistungsstufen möglich sind, wie Glühkerzen bzw. Leistungsschalter vorhanden sind.

Die Taktfrequenz f der Ansteuerung der Leistungsschalter ist vom Quadrat der Batterieklemmenspannung UB abhängig und somit proportional zu $N \times UB^2$, wobei N z.B. gleich 1 ist, so daß sich für jede beliebige Prüfspannung im interessierenden Bereich von 0 bis 30 Volt die zugehörige Soll-Frequenz leicht errechnen läßt. 1 Volt ergibt 1 Hertz und 15 Volt ergeben 225 Hertz. Es ist ein von 1 abweichender Wert für die Konstante N von beispielsweise 0,1 bis 10 pro grammierbar, je nach Bedarf können auch andere Werte gewählt werden.

Der Innenwiderstand der voll ausgesteuerten Leistungshalbleiterschalter ist im Vergleich zum Widerstandswert der kalten Glühkerze vernachlässigbar klein und beträgt beispielsweise 10 Milliohm im Vergleich zu 250 Milliohm der Glühkerze. Die Ansteuerschaltung wird z.B. mit einer Spannungsverdoppler-Schaltung betrieben, damit Spannungseinbrüche beim Anlassen auch nicht zeitweise zum Ausfall der Ansteuerung führen (bei 12-Volt-Anlagen). Die Halbleiterleistungsschalter können darüberhinaus den Strom begrenzen, sobald eine Überspannung auf der Leistungsseite von beispielsweise 18 Volt auftritt, wodurch die Glühkerzen vor einer Überlast, beispielsweise bei einer 24-Volt-Starthilfe für eine 12-Volt-Anlage zusätzlich geschützt sind.

Die Glühanlage ist vorzugsweise mit selbstregelnden Glühkerzen gemäß DE-C-2 802 625 bestückt, wobei die Glühkerzen so ausgelegt sind, daß sie bei voller Batteriespannung mit mehrfacher Überlast betrieben werden und bei Nennspannung von beispielsweise 6 Volt bei Vierzylinderanlagen in weniger als 3 Sekunden auf 850° C hochgeheizt würden. Die Auslegung ist derart, daß bei voller Betriebsspannung ein Vielfaches an Überlast auftritt, das gleich der Anzahl der Glühelemente ist. Das bedeutet eine vierfache Überlast bei vier Glühkerzen und eine zwölffache Überlast bei zwölf Glühkerzen. (Dauerlastauslegung für die Spannung: $(1/\sqrt{12}) \times U_N$).

Es ist ein erster Impulszähler für die Zeitbegrenzung der Glühkerzen-Vorglühzeit vorhanden, wobei Impulse des vom Quadrat der Batteriespannung abhängigen Taktgebers bis zu einem fest vorgegebenen Wert gezahlt werden. Bei 11 Volt (121 Hz) werden beispielsweise 100 Impulse für 0,8 s gezählt. Bei diesem Wert sind die Glühkerzen sicher auf 850 - 1050° C aufgeheizt, wobei die in dieser Phase zugeteilte Energie nahezu konstant und unabhängig von der schwankenden Batteriespannung ist.

Ein weiterer Impulszähler dient für die Zeitbegrenzung der sich an die Vorglühzeit anschließenden Anlaßbereitschaft und zählt die Impulse des bereits erwähnten Taktgebers bis zu einem fest vorgegebenen weiteren Wert. Bei 11,5 Volt (132 Hz) sind das ca. 2.640 Impulse für 20 s.

Es ist ein dritter Impulszähler vorgesehen, der bereits auf der ersten Zündschloßstufe, d.h. der Lenkradentriegelung vom o.a. Taktgeber angesteuert wird und auf jede Glühkerze mindestens einen Prüfstromimpuls fließen läßt, so daß unter Last geprüft werden kann, ob die Batterie in Ordnung ist, womit der Nebeneffekt verbunden ist, daß die Glühkerzen bereits in dieser Phase vorgeheizt werden. Vorzugsweise ist die Anzahl der Zählimpulse zur Zeitbestimmung durch die Anzahl der Heizelemente ohne Rest teilbar, und zwar für alle Glühabschnitte vom Vorheizen bis zum Glühen bei laufender Maschine.

Die Glühkerzen werden beim laufenden Glühbetrieb für alle Glühabschnitte vom Vorheizen bis zum Glühen bei laufender Maschine sowohl auf Unterbrechung als auch auf Kurzschluß über einen Spannungsabfall am Halbleiterleistungs-Schalter überwacht. Wenn dessen Temperaturgang geeignet korrigiert ist, kann auch der Glühkerzenstrom gemessen werden. Eine Glühkerzenüberwachung ist auch dann möglich, wenn nicht elektrisch beheizt wird, da die Leistungsschalter die Glühkerzen von der Batterie trennen, so daß der Glühkerzenwiderstand oder der Glühkerzenstrom periodisch beim Takten bzw. beim andauernden Nichtheizen gemessen werden kann. Der Glühkerzenwiderstand wird in den Heizpausen impulsförmig gemessen und zur Glühkerzenheizungsregelung herangezogen, indem auf die nächsthöhere oder nächstniedrigere Leistungsstufe umgeschaltet wird, wenn ein vorgesehener kritischer Wert erreicht wird, und zwar beim Glühen bei laufender Maschine. Daraus ergibt sich, daß beim Glühen bei laufender Maschine nicht mit voller Heizleistung gefahren wird, sondern nur in den Leistungsstufen 1/ 4, 2/ 4, 3/4 bei vier Glühkerzen, damit die notwendigen Meßpausen auftreten.

Das Glühen bei laufender Maschine wird zumindest vorrübergehend dann unterbrochen, wenn ein kritischer Stromwert der Glühkerze bereits unterschritten wird, d.h. wenn beispielsweise die Maschine die Glühkerzen von selbst bereits genügend aufheizt, und wird erst dann wieder aufgenommen, wenn eine vorgegebene Anzahl von Impulsen des Taktgebers gezählt ist und der kritische Stromwert wieder überschritten ist (Zähler 6x). Dieser kritische Wert des Glühkerzenstromes ist in Abhängigkeit von der Maschinentemperatur, beispielsweise der Kühlwassertemperatur, der Öltemperatur, der Zylinderwandtemperatur, proportional oder sich stufenförmig ändernd, vorgegeben, wobei Temperatursensoren entweder mit kontinuierlicher Kennlinie oder mit Stufencharakter (Bimetall-Schalter) vorgesehen sein können.

Das Glühen bei laufender Maschine, z.B. im Leerlauf oder im unteren Teillastbereich, beginnt automatisch mit der Laststufe 1/ 4, sobald der Widerstandswert der Glühkerzen einen unteren vorgegebenen Widerstands-Sollwert erreicht, und wird wieder unterbrochen, sobald ein oberer Sollwert erreicht ist. Sobald der Kühlwasser- oder Öltemperaturfühler bei laufender Maschine eine untere kritische Temperatur von beispielsweise 40° C wahrnimmt, wird der Grenzwertbereich für den Glühkerzenstrom wieder neu angesetzt, wobei gleichzeitig auf die Leistungsstufe 1/2 bei Vierzylinder-Anlagen umgeschaltet wird. Sobald der Kühlwasser- oder Öltemperaturfühler bei laufender Maschine eine weitere noch tiefer liegende Temperatur wahrnimmt, wird auf die Heizleistungsstufe 3/4 bei Vierzylinderanlagen umgeschaltet.

Wenigstens eine Glühkerze mit temperaturveränderlichem Widerstand dient als Sensor, um die Heizleistung mehrerer Glühkerzen zu steuern oder zu regeln, wobei der Glühkerzenstrom ausgewertet wird. Es können auch mehrere Glühkerzen als Sensoren verwandt werden, um z.B. über eine Mittelwertbildung der infolge von Fertigungstoleranzen unterschiedlichen Werte die eigentliche Steuerung oder Regelung der Heizleistung zu bewirken.

Ein Anlasserstromsignal wird dazu herangezogen, bei einem großen Anlasserstrom zumindest bei den Spitzenwerten oberhalb vorgegebener Grenzwerte die Glühkerzenheizung wenigstens zeitweise stillzulegen. Hierdurch ist der Glühkerzenschutz bei einer 24-Volt-Starthilfe bei einer 12-Volt-Anlage sichergestellt.

Der fließende Ladestrom der Lichtmaschine wird als Maß dafür herangezogen, ob die Maschine läuft oder nicht, und die Glühkerzenheizung wird über einen vierten Zähler mit voreingestellter Impulszahl unterbrochen, wenn kein Ladestrom mehr vorhanden ist, d.h. wenn beispielsweise der Motor nach dem Anlassen wieder von selbst ausgegangen ist. Es kann auch ein Öldruckschalter-Signal als Maß für die stehende oder laufende Maschine herangezogen werden, wie es in der DE-A-21 06 855 dargestellt ist. Ebenso sind geeignete Drehzahlsensoren anwendbar.

Der Aufbau der Schaltung kann konventionell aus Einzelelementen auf Leiterplatte und Leistungsteilen mit Kühlkörpern ausgebildet sein, die Schaltung kann auch in Dickschicht-Technik ausgeführt sein, wobei Leistungsteil und Steuerteil als getrennte Hybride ausgeführt sind.

Die Ausführung kann auch mittels eines Mikro-Computers erfolgen, in dem die angegebenen 5 Zählfunktionen, die Taktgeberfunktion mit einer Frequenz, die quadratisch von der Batteriespannung abhängt, die Sensoranpassung, die Glühkerzenstrommessung und die logischen Verknüpfungen verwirklicht sind, d.h. beispielsweise die logischen Zusammenhänge zum Schalten der verschiedenen Leistungsstufen als Kennfeld in Abhängigkeit vom Glühkerzenstrom, von der Maschinentemperatur und von der Stellung des Schlüsselschalters abgespeichert sind. Der Mikro-Computer kann auch Aufgaben von anderen Systemen übernehmen, beispielsweise die Beleuchtungseinrichtung überwachen, die Bremsbeläge kontrollieren und Aufgaben der Armaturenbrett-Elektronik bewältigen. Es kann auch der Mikro-Computer eines anderen Systems im Fahrzeug die logischen Funktionen, die Sensoranpassung, die Zählerfunktionen und die Taktgeberfunktionen mitübernehmen.

Die Steuerung oder Regelung für Rußfilter-Reinigungsanlagen wird vom Mikro-Computer mitübernommen. Es wird beispielsweise die Heizung nur bei laufender Maschine eingeschaltet, wobei auch hier die Heizleistung auf mindestens zwei separat ansteuerbare Heizelemente verteilt wird, und entweder der Heizelementestrom oder das Signal eines oder mehrerer separater Temperaturfühler als Steuersignal benutzt wird.

Dem Fahrer des Fahrzeuges werden wenigstens die Anlaßbereitschaft und die Tatsache, daß der Motor nicht läuft, angezeigt, was über eine Lampe oder eine Leuchtdiode gegebenenfalls blinkend erfolgen kann, was jedoch auch über akustische Signale möglich ist. Bei einem Fernstart, z.B. auf Schiffen, sind zusätzliche Anzeigen für die stehende Maschine, die laufende Maschine sowie Signale für eine intakte oder schadhafte Glühanlage nötig. Die Anzeige der Anlaßbereitschaft wird unterhalb einer gegebenen Maschinentemperatur, beispielsweise unterhalb von 0° C, geeignet verzögert, damit das Anlassen der Maschine sicher erfolgen kann.

Als Anzeige für den jeweils momentanen Zustand der Batterie kann ein integrierendes Meßinstrument mit geeigneter Skalenanzeige vorgesehen sein, das von dem sowieso vorhandenden Taktgeber entsprechend dessen Taktfrequenz beaufschlagt wird, wobei die sich bei schwacher oder zu stark belasteter Batterie einstellende niedrige Taktfrequenz einen entsprechenden Ausschlag des Meßinstrumentes in einem roten Feld bewirken sollte.

Vor einem Stillsetzen des Motors bei einem Ampelstop und einem Wiederstart und vor dem Abstellen des Motors wird die elektrische Anlage auf ihre momentane Situation geprüft, wobei alle eingeschalteten Verbraucher, beispielsweise das Licht usw., einbezogen werden, indem die momentane Batterieklemmenspannung über die Taktfrequenz des ständig mitlaufenden Taktgebers geprüft wird, wobei eine vorgegebene Mindestfrequenz überschritten sein muß, um einen erforderlichen Wiederstart möglich erscheinen zu lassen. Für Stop-Wiederstart scheint eine zusätzliche Fahrersitz- und Fahrertürüberwachung sinnvoll zu sein. Bei Unterschreiten der Mindestfrequenz wird die Maschine nicht abgestellt und wird der Fahrer darüber informiert, daß der derzeitige Zustand der Anlage einen erfolgreichen automatischen Wiederstart nicht erlaubt, da beispielsweise zu viele Verbraucher angeschlossen sind, der Batteriezustand nicht in Ordnung ist, weil die Batterie zu schwach geladen oder zu kalt ist usw.. Bei Unterschreiten der erforderlichen Mindestfrequenz bei stehender Maschine infolge der Energieumsätze der eingeschalteten Verbraucher ergeht ein Warnsignal an den Fahrer zum Abschalten der Verbraucher, um einen erfolgreichen Wiederstart nicht zu gefährden.

Auch bei unsachgemäß oft wiederholten Starts schützen sich die Glühkerzen selbst vor einer Überlast durch ihre Abregeleigenschaft, auch wenn sie beim Wiederholstart noch eine erheblich hohe Temperatur haben. Diese Schwierigkeit kann auch elektronisch bewältigt werden, sofern die Glühkerzenregeleigenschaft allein nicht ausreicht. Wiederholstarts mit einer 24-Volt-Starthilfe bei einer 12-Volt-Anlage erfolgen erst dann, wenn ein Temperaturfühler an den Leistungsschaltern deren ausreichende Abkühlung festgestellt hat, wobei sich eine entsprechende Verzögerung der Anlaßbereitschaftsanzeige gegebenenfalls ergibt.

Bei Stationärmaschinen mit Zugriff auf Wechsel-oder Drehstromnetz wird die Taktgeberfunktion mit dem Netz synchronisiert und wird die Energie halbwellenförmig zeitlich nacheinander oder gleichzeitig mehreren Heizelementen, beispielsweise den Glühkerzen, zugeteilt. Jede Glühkerze hat einen eigenen Leistungsschalter und es sind ein gemeinsamer Transformator zur Spannungsanpassung an die Glühkerzen und eine Halbwellengleichrichtung vorgesehen.

Vor der Anlage kann eine Verpolungs-Schutzdiode vorgesehen sein, die Anlage selbst kann mit einer Sicherung ausgerüstet sein und die Sicherung kann nur dann ausgelöst werden, wenn ein Leistungshalbleiter-Schalter durchlegiert, indem eine geeignete Schaltung vorgesehen ist, wodurch die Batterie gegen unerwünschte Entladung geschützt wird.

Es können Maßnahmen getroffen sein, Störimpulse von der Elektronik abzuhalten. Die Elektronik kann in 125° C -Technik ausgeführt sein, und einen Betriebsbereich von - 40 (- 55° C) bis +125° C haben.

Anstelle des Glühkerzenstromes zur Steuerung bzw. Regelung der Glühkerzenheizung kann auch ein Maschinenleistungssignal herangezogen werden, das aus dem Lichtmaschinendrehzahl-Signal und dem Abgastemperatursignal gebildet ist.

Beim Anlassen ohne tatsächliches Erreichen der Anlaßbereitschaft wird auf jeden Fall mitgeglüht,auch wenn die Batteriespannung unter einen sonst nicht zulässigen Minimalwert fällt, was beispielsweise bei einem Start bei tiefentladender Batterie der Fall ist.

Die Temperaturgangkompensation der Leistungsschalter erfolgt über einen Referenzleistungsschalter aus gleicher Serie, der mit einem Referenzstrom betrieben wird, und gleiche Wärmeabfuhrverhältnisse aufweist, beispielsweise auf gleiche Keramikträger montiert ist.

Zur Vermeidung eines überhöhten Beschleunigungsgeräusches während der Beschleunigungsphase wird bei laufender Maschine geglüht und wird erst die Heizung abgeschaltet, wenn ein vorgesehener Glühkerzengrenzstrom erreicht ist.

Als Maß für den laufenden Motor können Signale bezüglich der Zuführung von Kraftstoff oder direkte Drehzahlsignale verwandt werden. Eine Glühkerzenzustandsüberwachung erfolgt dadurch, daß nicht die tatsächliche Glühkerzentemperatur gemessen wird, sondern daß dafür der sich einstellende Widerstandswert oder auch der Glühkerzenstrom herangezogen wird. Der Widerstandswert wird dabei in den Taktpausen gemessen. Schließlich kann ein Kühlwasserfühler als Sensor dazu verwandt werden, die Glühzeiten und Leistungsstufen anzupassen.

Das erfindungsgemäße Verfahren und die erfindungsgemäße Vorrichtung sind nicht auf eine Vierzylinder-Anordnung beschränkt. Je mehr Zylinder vorgesehen sind, um so feiner kann die Glühkerzenheizung stufig verändert werden.

Anwendungsmöglichkeiten bestehen auch bei Verdampferanordnungen oder Flammstartanlagen, sofern mehrere Heizelemente vorgesehen sind, d.h. allgemein bei mehreren gleichartigen selbstregelnden Heizelementen mit Anpassung an den Kraftstoffdurchsatz.

Es sind weiterhin auch Glühkerzen mit zusätzlich eingebauten PTC-Widerständen und Glühkerzen mit Nickeldrahtwendeln oder Glühkerzen mit Konstant-Widerstandswendeln betreibbar, insofern als genügend Elemente eingesetzt sind und die Anfangsüberlastung ein mehrfaches, beispielsweise ein 6-faches bei einer Sechszylinder-Anlage beträgt,damit eine schnelle Aufheizung möglich ist.

Bei Konstantdrahtwendeln kann der Glühelementstrom nicht zur Heizleistungsregelung herangezogen werden. Hier müssen separate Temperaturfühler, beispielsweise Thermoelemente als Sensoren eingesetzt werden.

Wenn das Problem der Zündverzugsmessung im Brennraum, relativ zum optimalen Punkt, beispielsweise über eine Ionisationssonde mit entsprechender Beschaltung gelöst ist, ergibt sich die Möglichkeit, mittels Glühkerzen auf vorgegebenen Zündverzug durch eine feinfühlige oder stufige Verstellung der Heizleistung zu regeln.

Bei einer 24-Volt-Gleichspannungsanlage entfallen insbesondere spezielle Probleme der Spannungsversorgungsschaltung, (Spannungseinbrüche gehen nicht so tief, daß Halbleiter zeitweise nicht versorgt werden),sowie die Probleme des Anlassens einer 12-Volt-Anlage mit einer 24-Volt-Starthilfe.

VERSUCHSBEISPIEL

Es wurde eine geeignete Vierzylinder-Glühanlage mit üblichen Bauteilen erstellt. Um die Einschaltstromspitze von 60 A je Glühkerze zu beherrschen, wurde das Leistungsrelais durch mehrere parallel liegende Halbleiterschalter ersetzt, wobei jeder Glühkerze 2 parallele Schalter zugeordnet waren. Falls verfügbar, reicht jedoch auch ein einziger leistungsfähiger Schalter aus.

Es wurden selbstregelnde 6-Volt-Glühkerzen eingesetzt, die bei Nennspannung normalerweise in ca. 3 Sek. auf 850° C aufheizbar sind. Mit einer 12-Volt-Anlage wurden diese Glühkerzen mit 4-facher Überlast in der Schalterstellung zum Vorglühen bis zur Anlaßbereitschaft geheizt, wobei alle Leistungsschalter zunächst gleichzeitig eingeschaltet waren. In 0,7 s waren 850° C erreicht. Ein Taktgeber mit Vorwahlzähler, der auf eine vorgegebene Impulszahl geschaltet war, schaltete dann die Ansteuerung der Leistungsschalter so, daß sie nacheinander betrieben wurden und ihre Stromimpulse sich lückenlos aneinanderreihten. Die Glühkerzen hielten dabei eine Temperatur von ≥ 850° C.

Bei niedriger Taktfrequenz um 1 Hz herum ergab sich ein deutlich sichtbares pulsierendes Glühen der Heizelemente. Bei versuchsweise angehobener Taktfrequenz auf 20 Hz stellte sich eine mittlere, nicht mehr pulsierende Glühung bei 950° C ein. Die Betrachtung des Batteriestromverlaufs ergab nur noch eine Restwelligkeit in der Größenordnung der Glühkerzenwiderstandstoleranz. Bei weiterer Taktfrequenzerhöhung auf 30 Hz änderte sich die Restwelligkeit nicht.

Die Stufe der Anlaßbereitschaft wurde ca. 20 s aufrechterhalten. Ein zweiter, vom Taktgeber angesteuerter Zähler schaltete dann die Endstufe ab, um die Batterie bei nicht erfolgtem Anlassen zu schonen.

In einer weiteren Stufe wurde während der Anlaßbereitschaft der Anlasser betätigt, es erfolgte in Abhängigkeit von der Batteriespannung eine neue Umschaltung auf eine höhere Leistungsstufe, bei der immer 2 Glühkerzen gleichzeitig und paarweise nacheinander, aber so betätigt wurden, daß sich wiederum die Stromimpulse lückenlos aneinanderreihten. Die Batteriespannung sank mit periodischen Einbrüchen entsprechend der Anlasserdrehzahl ab.

Die Glühkerzen wurden infolge einer niedrigeren Spannung trotz der insgesamt längeren Einschaltzeit nicht überhitzt.

Der Anlaßstrom wurde gemessen und dazu benutzt, die Taktung, und damit die Ansteuerung der Leistungsschalter zeitweise außer Betrieb zu setzen, wobei die Leistungsschalter immer dann abgeschaltet wurden, wenn der Anlasserstrom einen vorgegebenen Schwellenwert überschritt.

Der Zündschalter wurde nun in Fahrstellung zurückgedreht, und die Heizleistung wurde auf die spannungsabhängige Leistungsstufe zurückgenommen. War der Start erfolglos, so setzte das fehlende Drehzahl-Signal infolge der nichtladenden Lichtmaschine die Nachglühung über den Taktgeber und den Zähler nach 5 Sek. auf Null. Das Taktschaltgerät war so geschaltet, daß es erst wieder auf den spannungslosen Zustand umgeschaltet werden mußte, bevor ein neuer Start möglich war. Über Vorglühen, Anlaßbereitschaft und Anlassen erfolgte ein neuer Start, wobei sich die Glühkerzen bei wiederholtem Start durch ihre Selbstregeleigenschaft vor einer Anfangsüberhitzung schützten. Die Nachheizung wurde dann batteriespannungsabhängig gesteuert, wobei die Maschine einwandfrei weiterlief.

Nach ca. 5 Min. wurde die Nachheizung über den Taktgeber und den Zähler auf Null gesetzt. Das könnte genauso gut über einen Temperaturfühler oder Bimetallschalter im Kühlwasser oder Motoröl bei vorgegebener Temperatur erfolgen.

Bei Maschinenvollast könnten die Glühkerzen in der Nachheizphase überhitzt werden. Deshalb wurde für weitere Versuche der Heizstrom einer Glühkerze überwacht und wurde bei Erreichen einer Stromgrenze die Heizung abgeschaltet. Bei abgeschalteter Nachheizung wurde ca. alle 20 s mit einzelnen Tastimpulsen der Glühkerzenstrom gemessen und wurde bei Bedarf die Heizung wieder eingeschaltet. Wenn für die Vorglühdauer unter vorstehenden Bedingungen ca. 100 Impulse angesetzt werden, ist das Vorglühen in 0,8 s beendet. Die Anlaßbereitschaft besteht bei ca. 2640 Impulsen ca. 20 s lang, und das Abstellen der Glühung nach stehengebliebener Maschine erfolgt bei ca. 600 Impulse in 5 s.

Um zu verhindern, daß bei Spannungseinbrüchen z.B. beim Anlassen die Ansteuerung der Halbleiter zeitweise ausfällt, wurde die Spannungsversorgung der Elektronik so abgestimmt, daß die erforderliche Mindestbetriebsspannung sichergestellt war.

Bei einer Starthilfe mit einer 24-Volt-Anlage dauerte die Aufheizung auf 850° C ca. 0,2 s bis 100 Impulse des Taktgebers abgelaufen waren. (Impulsfrequenz vom Quadrat der Batteriespannung abhängig; bei 24V : 576 Hz)

Während der Anlaßbereitschaft bei 24V-Betrieb wurde mit der Stufe 1/4 getaktet, wobei jedoch drei Impulszyklen ausgesetzt wird und nur ein Zyklus geheizt wird, um eine Überhitzung zu vermeiden. Beim Anlassen wird die Glühung entsprechend einem vorgegebenen Anlasserstromschwellenwert praktisch ganz unterdrückt. Das Nachglühen wird so lange unterdrückt, bis die Lichtmaschine eine Ladespannung abgibt, d.h. bis dann, wenn die 24-Volt-Starthilfe abgeklemmt ist.

Eine besondere Möglichkeit ergibt sich zur Kontrolle der Glühanlage. Beim Entriegeln des Lenkrades durch den Schlüsselschalter kann bereits die Spannung an die Glühanlage gelegt werden, und kann weiter über jede Glühkerze ein Impuls oder können mehrere Impulse gegeben werden. Das Prüfergebnis kann dem Fahrer somit noch vor Glühbeginn mitgeteilt werden.

Es kann ausreichen, anstelle eines vom Quadrat der Batteriespannung abhängigen Taktgebers die stark schwankende Batteriespannung über mehrere Spannungsschaltschwellenwerte auszugleichen, um eine Überhitzung zu vermeiden. Die Selbstregeleigenschaft der Glühkerzen trägt zu nahezu kontinuierlichen Übergängen bei. Die Zeitglieder werden dann beispielsweise festeingestellt. Bei der in Fig. 8 dargestellten Schaltung wurden 10.000 Schaltvorgänge über 20 s ohne einen Glühkerzenausfall demonstriert.

Mit dem erfindungsgemäßen Verfahren und der erfindungsgemäßen Vorrichtung ist somit ein Sofortstart einer Brennkraftmaschine in Kombination mit einem langen Nachglühen bei laufender Maschine möglich, wobei die Glühkerzen-Temperatur auf unkritische Werte reduziert bleibt und die Lebensdauer erheblich verlängert ist.

Die Ausbildung ist analog auch auf 6-Zylinder übertragbar, wobei die Leistungsstufen 100 %, 83 1/3 %, 66 2/3 %, 50 %, 33 1/3 %, 16 2/3 % und O % betragen.

Weitere Anwendungsmöglichkeiten des erfindungsgemäßen Verfahrens und der erfindungsgemäßen Vorrichtung sind Alkohol-Verdampfer für Metanol, Äthanol sowie Benzin, Kerosin für ein Ansaugrohr mit z.B.3 bis 7 Heizstäben, die in gleicher Art zu schalten bzw. zu takten sind, zur Leistungsanpassung an die Durchflußmenge und zum Schnellstart. Die Zeiten sind dabei allerdings etwas anders zu wählen. Ein Schnellstart in 5 Sek. ist ausreichend, das Nachglühen erfolgt bis zu 15 Min.

Weitere Anwendungsmöglichkeiten sind Schnellstartanlagen für 2 oder mehr Flammglühkerzen pro Flammrohr mit einer Startzeit von 10 Sek. und einem Nachflammen von bis zu 20 Min. sowie die Aufheizung von mehreren gleichartigen Heizpatronen für Kunststoff-Spritzwerkzeuge.

Beim Großmotorenstart werden die Glühkerzen kaltgeblasen, der 1. Start ist meist vergeblich. Durch die Kombination mit der Stromtaktung läßt sich das vermeiden, indem während des Anlassens höhere Leistungsstufen gewählt werden als es dem momentanen Spannungszustand entspricht.

Die Vorheizung erfolgte bei dem obigen Ausführungsbeispiel über eine festgelegte Zeitspanne, die durch eine vorgegebene Anzahl von Taktimpulsen bestimmt ist. Von dieser Zeitspanne wird angenommen, daß sie zum Erreichen der Temperatur von mindestens 850° C ausreicht. Die Ermittlung der tatsächlich erreichten Temperatur als Umschaltkriterium ist aber prinzipiell auch möglich, wobei dabei sehr strenge Anforderungen bezüglich des elektrischen Widerstandsverlaufs der Glühkerzenwendeln in Abhängigkeit von der Temperatur gestellt werden müssen.

**Patentansprüche**

1. Verfahren zum Schnellaufheizen einer elektrischen Heizvorrichtung mit mehreren Heizelementen, insbesondere einer elektrischen Glühanlage mit mehreren Glühkerzen für eine Brennkraftmaschine, bei dem die Heizelemente am Anfang mit einem hohen Gleichstrom bzw. hoher Überlast vorgeheizt werden und nach Erreichen einer vorgegebenen Temperatur mit Stromimpulsen versorgt werden, dadurch gekennzeichnet, daß für die impulsförmige Stromversorgung verschiedene vorbestimmte Heizleistungsstufen benutzt werden, für welche verschiedenen Heizleistungsstufen die vorhandenen Heizelemente zu vorbestimmten, für die verschiedenen Heizleistungsstufen unterschiedlich großen Heizelementgruppen zusammengesetzt werden, und daß die Stromimpulse in den verschiedenen Heizleistungsstufen den zur jeweiligen Heizleistungsstufe zugehörigen vorbestimmten Heizelementgruppen periodisch, pro Gruppe gleichzeitig, so geliefert werden, daß sich die den jeweiligen vorbestimmten Heizelementgruppen gelieferten Stromimpulse zeitlich im wesentlichen so aneinander anschließen, daß in der jeweiligen Heizleistungsstufe der Summenstrom als Funktion der Zeit praktisch konstant ist.

2. Verfahren nach Anspruch 1, zum Schnellaufheizen einer elektrischen Glühanlage mit mehreren selbstregelnden Glühkerzen für eine Brennkraftmaschine, dadurch gekennzeichnet, daß vor dem Umschalten auf die impulsförmige Stromversorgung mit einer Überlastspannung von $(1/\sqrt{z})$x Un vorgeglüht wird, wobei z die Anzahl der Glühkerzen und Un die Batteriespannung bezeichnen.

3. Verfahren nach Anspruch 1 oder 2, dadurch gekennzeichnet, daß bei der impulsförmigen Stromversorgung der Glühkerzenstrom überwacht und zur Überwachung der Glühkerzenfunktion herangezogen wird.

4. Verfahren nach Anspruch 3, dadurch gekennzeichnet, daß bei der Glühkerzenstromüberwachung der Spannungsabfall an Leistungsschaltern, die zum Anlegen der Stromimpulse vorgesehen sind, gemessen wird.

5. Verfahren nach einem der Ansprüche 2 bis 4, dadurch gekennzeichnet, daß in den Stromimpulspausen, betreffend die jeweilige Glühkerze, der jeweilige Widerstand der Glühkerzen zum Überwachen der Glühkerzenfunktion jeweils gemessen wird.

6. Verfahren nach einem der vorhergehenden Ansprüche, dadurch gekennzeichnet, daß das Erreichen der vorgegebenen Temperatur nach Ablauf eines vorgegebenen Zeitintervalls, das durch eine bestimmte Anzahl von Taktimpulsen bestimmt ist, deren Frequenz vom Quadrat der Batteriespannung abhängt, angenommen wird, und die Umschaltung auf impulsförmige Stromversorgung nach Ablauf dieses Zeitintervalls erfolgt.

7. Verfahren nach Anspruch 6, dadurch gekennzeichnet, daß der Batteriezustand dadurch überwacht wird, daß die Taktimpulsfrequenz gemessen wird.

8. Vorrichtung zur Durchführung des Verfahrens nach Anspruch 1, dadurch gekennzeichnet, daß jedem Heizelement (1a bis 1d) ein eigenes Schaltelement (2a bis 2d) zugeordnet ist, das im Stromversorgungskreis der Heizelemente (1a bis 1d) liegt, und eine Ansteuerlogik (3) zum pro Gruppe gleichzeitig erfolgenden An- und Abschalten der Schaltelemente (2a bis 2d) von vorbestimmten, für verschiedene Heizleistungsstufen in unterschiedlicher Gruppengröße zusammengesetzten Heizelementgruppen vorgesehen ist.

9. Vorrichtung nach Anspruch 8, dadurch gekennzeichnet, daß die Schaltelemente (2a bis 2d) aus Halbleiterleistungsschaltern bestehen.

10. Vorrichtung nach einem dar Ansprüche 8 oder 9, dadurch gekennzeichnet, daß die Ansteuerlogik (3) Zähler (6v, 6w, 6x, 6y, 6z) enthält, die am Ausgang eines Taktgebers (5) liegen, um bei Erreichen eines bestimmten Zählerstands den Schaltelementen (2a bis 2d) Steuersignale zu senden.

11. Vorrichtung nach Anspruch 8 zum Schnellaufheizen einer elektrischen Glühanlage mit mehreren Glühkerzen für eine Brennkraftmaschine, gekennzeichnet durch einen Kühlwassersensor, einen Anlasserstromsensor und einen Ladestromsensor für die Lichtmaschine der Brennkraftmaschine, deren Ausgangssignale an der Ansteuerlogik (3) liegen, um den Schaltelementen (2a bis 2d) in Abhängigkeit von der Kühlwassertemperatur, dem Anlasserstrom und dem Ladestrom Steuersignale zu senden.

12. Vorrichtung nach Anspruch 11 , **gekennzeichnet** durch eine Überwachungsschaltung (13), die mit den Schaltelementen (2a bis 2d) verbunden ist, um auf einen Spannungsabfall an den Schaltelementen (2a bis 2d) ansprechend einen Kurzschluß und eine Unterbrechung der Heizelemente (1a bis 1d) und der Schaltelemente (2a bis 2d) festzustellen.

13. Vorrichtung nach Anspruch 10 zum Schnellaufheizen einer elektrischen Glühanlage mit mehreren Glühkerzen für eine Brennkraftmaschine, dadurch **gekennzeichnet,** daß ein Zähler (6v) zur Regelung der Vorglühzeit, ein Zähler (6w) zur Begrenzung der Anlaßbereitschaft, ein Zähler (6x) zur Vorgabe von Prüfimpulsen beim ersten Einschalten, beim Tasten bei laufender Maschine, beim Tasten vor einem vorübergehenden Abschalten der Maschine und beim Tasten während eines vorübergehenden Abschaltens der Maschine, ein Zähler (6y) zum Abschalten bei einer Fehlanlassung der Maschine und ein Zähler (6z) zur verzögerten Anzeige der Anlaßbereitschaft bei einer Temperatur von unter 0°C vorgesehen sind.

14. Vorrichtung nach Anspruch 11 oder 13, dadurch **gekennzeichnet,** daß die Schaltelemente (2a bis 2d) aus Leistungsschaltern bestehen, deren Innenwiderstand im vollausgesteuerten Zustand im Vergleich zum Widerstand der Glühkerzen vernachlässigbar klein ist.

## Claims

1. Method for rapidly heating an electrical heating device having a plurality of heating elements, in particular an electrical starter system having a plurality of heater plugs for an internal combustion engine, in the case of which the heating elements are preheated initially with a high direct current or a high overload and, when a predetermined temperature has been reached, are supplied with current pulses, characterised in that, for the pulsed current supply, different predetermined heating output stages are used, for which different heating output stages the existing heating elements are combined to form predetermined heating element groups which differ in size for the different heating output stages; and in that the current pulses are supplied periodically in the different heating output stages to the predetermined heating element group belonging to the respective heating output stage simultaneously per group such that the current pulses delivered to the respective predetermined heating element groups substantially adjoin one another chronologically in such a way that the total current in the respective heating output stage is practically constant as a function of time.

2. Method according to Claim 1 for rapidly heating an electrical starter system with a plurality of self-regulating heater plugs for an internal combustion engine, characterised in that, before the system switches over to the pulsed current supply, it is preheated with an overload voltage of $1/\sqrt{z} \times U_n$, z denoting the number of heater plugs and $U_n$ the battery voltage.

3. Method according to Claim 1 or Claim 2, characterised in that, during the pulsed current supply, the heater plug current is monitored and is used for monitoring the heater plug function.

4. Method according to Claim 3, characterised in that, during the monitoring of the heater plug current, the voltage drop is measured at power circuit breakers, which are provided for applying the current pulses.

5. Method according to any one of Claims 2 to 4, characterised in that the respective resistance of the heater plugs is measured in the current pulse pauses, with respect to the respective heater plug, in order to monitor the heater plug function in each case.

6. Method according to any one of the preceding claims, characterised in that it is assumed that the predetermined temperature is reached after a predetermined time interval, which is determined by a specific number of timing pulses of which the frequency is a function of the square of the battery voltage, and the changeover to the pulsed current supply occurs on expiry of this time interval.

7. Method according to Claim 6, characterised in that the state of the battery is monitored by the timing pulse frequency being measured.

8. Device for performing the method according to Claim 1, characterised in that one particular switching element (2a to 2d) is associated with each heating element (1a to 1d) and is located in the current supply circuit of the heating elements (1a to 1d), and a control logic (3) is provided for switching on and off, simultaneously per group, the switching elements (2a to 2d) of predetermined heating element groups combined in groups of different sizes for different heating output stages.

9. Device according to Claim 8, characterised in that the switching elements (2a to 2d) consist of semiconductor circuit breakers.

10. Device according to either of Claims 8 and 9, characterised in that the control logic (3) contains counters (6v, 6w, 6x, 6y, 6z) which are located at the output of the clock generator (5), in order to emit control signals when a specific counter stage of the switching elements (2a to 2d) is reached.

11. Device according to Claim 8 for rapidly heating an electrical starter system with a plurality of heater plugs for an internal combustion engine, characterised by a coolant sensor, a starter current sensor and a charging current sensor for the dynamo of the internal combustion engine, of which the output signals are located at the control logic (3) in order to emit control signals to the switching elements (2a to 2d) in dependence on the coolant temperature, the starter current and the charging current.

12. Device according to Claim 11, characterised by a monitoring circuit (13), which is connected to the switching elements (2a to 2d) in order to establish a short circuit and an interruption of the heating elements (1a to 1d) and of the switching elements (2a to 2d) in response to a voltage drop at the switching elements (2a to 2d).

13. Device according to Claim 10 for rapidly heating an electrical starter system with a plurality of heater plugs for an internal combustion engine, characterised in that there are provided a counter (6v) for regulating the preheating time, a counter (6w) for restricting the readiness to start, a counter (6x) for predetermining test pulses when the engine is first switched on, when scanning when the engine is running, when scanning before the engine is temporarily switched off, and when scanning whilst the engine is temporarily switched off, a counter (6y) for switching off the engine when there is a false start, and a counter (6z) for the delayed display of the readiness to start at a temperature of below 0°C.

14. Device according to Claim 11 or Claim 13, characterised in that the switching elements (2a to 2d) consist of circuit breakers of which the internal resistance is comparatively small in the fully driven state in comparison with the resistance of the heater plugs.

## Revendications

1. Procédé pour le chauffage rapide d'un dispositif électrique de chauffage comportant plusieurs éléments chauffants, et particulièrement d'une installation de bougies électriques comprenant plusieurs bougies de réchauffage pour un moteur à combustion interne, dans lequel les éléments chauffants sont préchauffée initialement avec un courant continu élevé ou une surcharge élevée et, après qu'une température prédéterminée est atteinte, sont alimentés par des impulsions de courant, caractérisé en ce que pour l'alimentation en courant sous forme d'impulsions don étages. différents prédéterminée de puissance de chauffage sont utilisés, dans lesdits étages différents de puissance de chauffage les éléments chauffants disponibles sont rassemblés en groupes prédéterminés d'éléments chauffants de valeur différente pour les divers étages de puissance de chauffage, et que les impulsions de courant dans les différents étages de puissance de chauffage sont fournies périodiquement et simultanément par groupe aux groupes d'éléments chauffants prédéterminés appartenant à l'étage de puissance de chauffage respectif, de sorte que les impulsions de courant délivrées simultanément par groupe aux éléments chauffants se succédent sensiblement l'une à l'autre dans le temps, et que dans chaque étage an puissance de chauffage la somme des courants est pratiquement constante en fonction du temps.

2. Procédé pour le chauffage rapide d'une installation de bougies électriques avec plusieurs bougies de réchauffage autorégulées pour un moteur à combustion interne selon la revendication 1, caractérisé en ce qu'avant la commutation sur l'alimentation sous forme d'impulsions, un préchauffage est effectué avec une tension de surcharge de $1/\sqrt{z} \times$ Un, dans laquelle $z$ désigne le nombre de bougies de réchauffage et Un, la tension de la batterie.

3. Procédé selon la revendication 1 ou 2, caractérisé en ce que dans l'alimentation sous forme d'impulsions le courant des bougies de réchauffage est surveillé et est utilisé pour la surveillance du fonctionnement des bougies de réchauffage.

4. Procédé selon la revendication 3, caractérisé en ce que pour la surveillance du courant des bougies de réchauffage, la chute de tension dans les circuits de puissance qui sont prévus pour appliquer les impulsions de courant, est mesurée.

5. Procédé selon l'une quelconque des revendications 2 à 4, caractérisé en ce que pendant les pauses d'impulsions de courant concernant les bougies de réchauffage respectives, la résistance correspondante des bougies de réchauffage est mesurée afin de surveiller le fonctionnement des bougies de réchauffage concernées.

6. Procédé selon l'une quelconque des revendications précédentes, caractérisé en ce que l'obtention de la température prédéterminée est fixée par l'écoulement d'un intervalle de temps prédéterminé qui est déterminé par un nombre déterminé d'impulsions d'horloge dont la fréquence est une fonction du carré de la tension de la batterie, et que la commutation sur l'alimentation en courant sous forme d'impulsions a lieu après la fin de cet intervalle de temps.

7. Procédé selon la revendication 6, caractérisé en ce que l'état de la batterie est surveillé de sorte que la fréquence des impulsions d'horloge soit mesurée.

8. Dispositif pour la mise en oeuvre du procédé selon la revendication 1, caractérisé en ce qu'à chaque élément chauffant (1a à 1d) un élément de commutation (2a à 2d) respectif est associé qui est situé dans le circuit d'alimentation en courant des éléments chauffants (1a à 1d), et qu'une logique de commande (3) est prévue pour la production simultanée par groupe de la conduction et du blocage des éléments de commutation (2a à 2d), de groupes prédéterminés d'éléments chauffants assemblés en tailles de groupes différentes pour différents étages de puissance de chauffage.

9. Dispositif selon la revendication 8, caractérisé en ce que les éléments de commutation (2a à 2d) consistent en commutateurs de puissance a semi-conducteurs.

10. Dispositif selon la revendication 8 ou 9, caractérisé en ce que la logique de commande (3) comprend des compteurs (6v, 6w, 6x, 6y, 6z) qui sont situés à la sortie d'un générateur de cadence (5), afin d'envoyer un signal de commande aux éléments de commutation (2a à 2d) lorsqu'un état déterminée de compteur est atteint.

11. Dispositif pour le chauffage rapide d'une installation de bougies électriques comprenant plusieurs bougies de réchauffage pour un moteur à combustion interne selon la revendication 8, caractérisé par un détecteur d'eau de refroidissement, un détecteur de courant de démarrage et un détecteur de courant de charge pour la dynamo ou l'alternateur du moteur à combustion interne, dont les signaux de sortie sont envoyés à la logique de commande (3) pour envoyer aux éléments de commutation (2a à 2d) un signal de commande en fonction de la température d'eau de refroidissement, du courant de démarrage et du courant de charge.

12. Dispositif selon la revendication 11, caractérisé par un circuit de surveillance (13) qui est relié aux éléments de commutation (2a à 2d), afin d'établir, en réponse à une chute de tension dans les éléments de commutation (2a à 2d), un court-circuit et une coupure des éléments chauffants (1a à 1d) et des éléments de commutation (2a à 2d).

13. Dispositif pour le chauffage rapide d'une installation de bougies électriques comprenant plusieurs bougies de réchauffage pour un moteur à combustion interne selon la revendication 10, caractérisé en ce qu'il est prévu un compteur (6v) pour la régulation du temps de préchauffage, un compteur (6w) pour la limitation de l'état de démarrage, un compteur (6x) pour l'application d'impulsions de test lors de la première mise en service, lors de manoeuvres pendant le fonctionnement du moteur, lors de manoeuvres avant une mise hors service momentanée du moteur et lors de manoeuvre pendant une mise hors service momentanée du moteur, un compteur (6y) pour la mise hors service lors d'un démarrage défectueux du moteur et un compteur (6x) pour l'indication différée de la disponibilité au démarrage à une température inférieure à 0° C.

14. Dispositif selon la revendication 11 ou 13, caractérisé en ce que les éléments de commutation (2a à 2d) sont constitués de commutateurs de puissance dont la résistance interne dans l'état de commande à pleine puissance est négligeable par un rapport à la résistance des bougies de réchauffage.

Fig.1

EP 0 288 085 B1

Fig. 2

Leistungsstufe  1/4

Leistungsstufe  1/2

Leistungsstufe  3/4

Leistungsstufe  4/4

Anlaßbereitschaft  4 Zyl.

Summenstrom 4GK

Zeit

Fig. 4

Vorglühen  4 Zyl.

Summenstrom 4GK

GK4  GK3  GK2  GK1

Zeit

Fig.3

19

## Anlassen  4-Zyl.

*Fig.5*

## Glühen im laufenden Motor 4-Zyl.
### oberhalb kritischem GK-Strom

*Fig. 6*

Fig.7                    Glühen im laufenden Motor

EP 0 288 085 B1

Fig. 8a

EP 0 288 085 B1

Fig. 8b

23

EP 0 288 085 B1

Glühen

100R

+U_B

+U_B

1K

100μ

ZPD 7V5

1M  Nachglühzeit

10K

337-16

1

KL 50

560R

+U_B

104

1

1

10K

1K

1M

1

47μ  Kurzglühzeit

NTC-Geber (Kühlwasser)

100R

2K2

+U_B

104

+

−

1/4 TAF 4453A

4K7

ZPD 6V8

104

+U_B

1M

+U_B

47μ  Startglühzeit

(B)

Fig. 8c

Fig. 8d

EP 0 288 085 B1

U Batt Kl 15
⊥

33V
2200µ/25V
DR1
1R
BUZ 72
470µ 40V
1K5
ZPO15
19,3 V
1
1
1K
1
1
1
102
2/3 4049
1M
101
7808
8 V
105
4×22µ/16V  6×104
+U_B
105
500K
1
U Batt
10K
3K3
104
1
+U_B
4K7
100K
Ⓐ
1K +U_B
1/4 TAF 453A
4K7
100K
1/4 TAF 4453A
1K +U_B
+U_B

10K
4017
R̄  4
CLK  0
1
Ēn  2
3
05...09
1
10K
10K
10K
10K
10K
10K
10K
10K
10K
100K
100K
100K
100K
100K
Ⓑ

*Fig. 9*

Heizung bei doppelter Impulsbreite für Element 1 u. 2

Leistungsstufe 1/4

Leistungsstufe 1/2

26

*Fig. 10*     *Umschaltvorgang*